# EUROPÄISCHE PATENTSCHRIFT

(11) **EP 1 768 204 B1**
(45) Veröffentlichungstag und Bekanntmachung des Hinweises auf die Patenterteilung: **14.10.2009**
(21) Anmeldenummer: 06016088.4
(22) Anmeldetag: 02.08.2006
(51) Int. Cl.: H01M 8/02

(54) **Dichtungsanordnung für einen Brennstoffzellenstapel und Verfahren zu dessen Herstellung**
Gasket structure for a fuel cell stack and method for its preparation
Joint d'étanchéité pour empilement de piles à combustible et procédé de fabrication

(30) Priorität: 21.09.2005 DE 102005045053
(43) Veröffentlichungstag der Anmeldung: 28.03.2007
(73) Patentinhaber: ElringKlinger AG, 72581 Dettingen (DE)
(72) Erfinder: Zerfass, Hans-Rainer, 65232 Taunusstein (DE); Henne, Rudolf, 71304 Böblingen (DE); Arnold, Johannes, 75179 Pforzheim (DE)
(74) Vertreter: Hoeger, Stellrecht & Partner Patentanwälte

(56) Entgegenhaltungen:
- EP-A- 1 492 190
- DE-A1- 19 805 142
- DE-C1- 19 538 034
- JP-A- 3 119 087
- US-A1- 2004 060 967
- US-A1- 2004 104 544

## Beschreibung

Die vorliegende Erfindung betrifft ein Verfahren zum Herstellen einer elektrisch isolierenden Dichtungsanordnung für einen Brennstoffzellenstapel, der mehrere Brennstoffzelleneinheiten umfasst, welche längs einer Stapelrichtung aufeinanderfolgen.

Zur Einstellung der gewünschten Betriebsspannung werden Brennstoffzelleneinheiten in der benötigten Anzahl aufeinander angeordnet, um so einen Brennstoffzellenstapel (Brennstoffzellenstack) zu erhalten. Um einen elektrischen Kurzschluss zu verhindern, müssen die Gehäuse von in dem Brennstoffzellenstapel aufeinanderfolgenden Brennstoffzelleneinheiten elektrisch voneinander isoliert werden. Außerdem ist es erforderlich, die Brenngaskanäle des Brennstoffzellenstapels gasdicht von den Oxidationsmittelräumen der Brennstoffzelleneinheiten und die Oxidationsmittelkanäle des Brennstoffzellenstapels gasdicht von den Brenngasräumen der Brennstoffzelleneinheiten zu trennen.

Bei bekannten Brennstoffzellenstapeln werden Dicht- und Isolationselemente aus Glaslot oder aus keramischen Dichtmaterialien verwendet, um die erforderliche elektrische Isolationswirkung und die erforderliche Abdichtwirkung zu erzielen.

Bei den meisten der üblicherweise verwendeten Dichtungsmaterialien ist der elektrische Widerstand bei der Betriebstemperatur einer Hochtemperatur-Brennstoffzelleneinheit (im Bereich von ungefähr 750°C bis ungefähr 850°C) nicht mehr ausreichend hoch, um eine zufriedenstellende Isolationswirkung zu erzielen. Ferner weisen einige der üblicherweise verwendeten Dichtungsmaterialien nur eine geringe chemische Beständigkeit und mechanische Festigkeit bei den bei einer Hochtemperatur-Brennstoffzelleneinheit häufig auftretenden Temperaturwechseln (zwischen Betriebs- und Ruhephasen) auf.

Die Abdicht- und die elektrische Isolationsfunktion der Dichtungsanordnung können voneinander getrennt werden. So kann die elektrische Isolation durch eine Keramikbeschichtung erfolgen, welche durch Verlötung mittels eines metallischen Lots mit einem angrenzenden Bauteil des Brennstoffzellenstapels verbunden wird. Durch die gasdichte Verlötung wird dabei gleichzeitig die Abdichtung der Brenngaskanäle bzw. der Oxidationsmittelkanäle des Brennstoffzellenstapels und die mechanische Fixierung der Brennstoffzelleneinheiten untereinander bewerkstelligt.

Die isolierende Keramikbeschichtung kann jedoch Poren und/oder Spalten und/oder Kapillaren entlang der Korngrenzen enthalten, insbesondere dann, wenn die Keramikbeschichtung durch thermisches Spritzen auf ein zu isolierendes Metallteil aufgebracht wird. Je nach Kapillaraktivität des verwendeten Lotes kann das Lot in die in der Keramikbeschichtung vorhandenen Poren, Spalten oder Kapillaren eindringen und einen Kurzschluss verursachen.

Die US 2004/104544 A1 offenbart eine Dichtungsanordnung für eine Hochtemperatur-Brennstoffzelle, die aus einem keramischen Material und Metall- oder Metallpräkursorpartikeln während des Betriebs der Brennstoffzelle in situ in sauerstoffhaltiger Atmosphäre gebildet wird.

Die DE 198 05 142 A1 offenbart eine Dichtungsanordnung für eine Hochtemperatur-Brennstoffzelle, die eine elektrisch isolierende KeramikSchicht und eine metallische Lotschicht umfasst.

Der vorliegenden Erfindung liegt die Aufgabe zugrunde, ein Verfahren zum Herstellen einer elektrisch isolierenden Dichtungsanordnung für einen Brennstoffzellenstapel, der mehrere Brennstoffzelleneinheiten umfasst, welche längs einer Stapelrichtung aufeinanderfolgen, zu schaffen, durch welches die Gehäuse der Brennstoffzelleneinheiten so miteinander verbindbar sind, dass auch bei hoher Betriebstemperatur eine ausreichende elektrische Isolationswirkung und eine ausreichende mechanische Festigkeit gewährleistet sind.

Diese Aufgabe wird erfindungsgemäß durch ein Verfahren gelöst, das die folgenden Verfahrensschritte umfasst:
- Erzeugen einer Keramik-Metall-Schicht aus einer Mischung eines Keramikmaterials und eines Metallmaterials und/oder eines Metallpräkursors;
- Erzeugen einer metallischen Lotschicht zusätzlich zu der Keramik-Metall-Schicht;
- zumindest teilweise Umwandlung des Metalls der Keramik-Metall-Schicht bei einem Lötvorgang in einer sauerstoffhaltigen Atmosphäre in eine elektrisch nichtleitende Metallverbindung zur Erzeugung einer nichtleitenden Grenzschicht.

Es wurde überraschenderweise herausgefunden, dass sich Kurzschlüsse durch eingedrungenes Lot, insbesondere in thermisch gespritzte Schichten der Dichtungsanordnung, erstaunlicherweise vermeiden lassen, wenn die Dichtungsanordnung eine solche nichtleitende Grenzschicht umfasst, welche aus einer Keramik-Metall-Schicht durch Umwandlung deren metallischen Anteils in situ in eine nichtleitende Metallverbindung erzeugt worden ist.

Die Entstehung eines Kurzschlusses ist, im Gegensatz zu Keramik-MetallSchichten, deren metallischer Anteil nicht in eine nichtleitende Metallverbindung umgewandelt wird, nicht zu befürchten. Dies stellt für den praktischen Einsatz einer solchen Dichtungsanordnung einen deutlichen Vorteil dar.

Die vorliegende Erfindung eignet sich insbesondere zur Herstellung von elektrisch isolierenden Dichtungsanordnungen für Hochtemperatur-Brennstoffzellen vom SOFC(Solid Oxide Fuel Cell)-Typ.

Bei einer bevorzugten Ausgestaltung der Erfindung wird die Keramik-Metall-Schicht, aus welcher die nichtleitende Grenzschicht gebildet wird, als eine Cermet-Schicht ausgebildet.

Die Keramik-Metall-Schicht wird vorzugsweise durch thermisches Spritzen, insbesondere durch atmosphärisches Plasmaspritzen, durch Vakuumplasmaspritzen oder durch Flammspritzen, erzeugt.

Besonders günstig ist es, wenn die Keramik-Metall-Schicht durch Hochgeschwindigkeitsvakuumplasmaspritzen (High Velocity Vacuum Plasma Spraying, abgekürzt: HV-VPS) erzeugt wird, da hochgeschwindigkeitsplasmagespritzte Schichten eine besonders hohe Dichte und eine besonders geringe Porosität aufweisen.

Das Verfahren des Hochgeschwindigkeitsvakuumplasmaspritzens (High Velocity Vacuum Plasma Spraying, abgekürzt: HV-VPS) ist beispielsweise in dem Artikel von R. Henne, W. Mayr und A. Reusch: "Einfluss der Düsenkontur beim Hochgeschwindigkeits-Vakuumplasmaspritzen", in DVS-Berichte DVS 152, Thermische Spritzkonferenz TS 93, März (3-5), 1993, Aachen, Deutschland, Seiten 7 bis 11, oder in dem Artikel von R. Henne, V. Borck, D. Siebold, W. Mayr, A. Reusch, M. Rahmane, G. Soucy, M. Boulos: "Converging-Diverging Nozzles for Improved Atmospheric Plasma Spraying" in VDI-Berichte Nr. 1166, 1995, Seiten 247 bis 266, beschrieben.

Zur seitlichen Begrenzung der Keramik-Metall-Schicht können während des thermischen Spritzens Schablonen oder Beschichtungsmasken verwendet werden.

Beim Plasmaspritzen können insbesondere die folgenden Plasmagase bzw. Plasmagaskombinationen verwendet werden:
- Argon;
- Stickstoff;
- Argon und Helium;
- Argon und Wasserstoff;
- Argon, Helium und Wasserstoff.

Die Keramik-Metall-Schicht kann insbesondere aus einer Mischung eines pulverförmigen Keramikmaterials und eines pulverförmigen Metalls und/oder eines pulverförmigen Metallpräkursors gebildet sein.

Unter einem Metallpräkursor ist dabei eine Metallverbindung zu verstehen, welche bei der Arbeitstemperatur des thermischen Spritzverfahrens in ihren metallischen Anteil und ihren nicht-metallischen Anteil zerfällt, so dass der Metallanteil der Verbindung in der Keramik-Metall-Schicht in metallischer Form vorliegt.

Erfindungsgemäß kann zur Erzeugung der Keramik-Metall-Schicht ein Metallpräkursor oder ein elementares Metall oder eine Mischung aus einem Metallpräkursor und einem elementaren Metall verwendet werden.

Bei Verwendung eines elementaren Metalls kann durch Einstellung einer geeigneten Umgebungsatmosphäre (beispielsweise einer Schutzgasatmosphäre, wie z.B. Argon) und/oder durch Zusatz eines Reduktionsmittels, z.B. Wasserstoff, die Umwandlung des Metalls in eine nicht als Lotbremse wirksame Metallverbindung verhindert werden.

Besonders günstig ist es, wenn ein Metallmaterial und/oder ein Metallpräkursor verwendet wird, das bzw. der ein aktives Metall umfasst.

Unter einem "aktiven Metall" ist dabei ein grenzflächenaktives Metall zu verstehen, wie es Aktivloten (metallischen Legierungen) in geringen Mengen zugefügt wird, um die Grenzflächenenergie zwischen einem keramischen Material und der Lotschmelze so weit herabzusetzen, dass eine Benetzung des keramischen Materials durch das Lot erfolgen kann.

Solche "aktiven Metalle" sind insbesondere die Metalle der Gruppe Titan, Zirkonium, Hafnium, Niob, Tantal, Silizium, Cer und Vanadium.

Als Metallpräkursor eignen sich insbesondere Hydride dieser aktiven Metalle.

Als pulverförmiges Keramikmaterial für die Bildung der Keramik-Metall-Schicht kann beispielsweise ein Keramikmaterial verwendet werden, das Aluminiumoxid und/oder Titandioxid und/oder Zirkoniumdioxid und/oder Magnesiumoxid umfasst.

Besonders günstig ist es, wenn zur Erzeugung der Keramik-Metall-Schicht ein Keramikmaterial verwendet wird, das Yttrium-stabilisiertes Zirkoniumdioxid und/oder einen Aluminium-Magnesium-Spinell umfasst.

Das mittlere Mischungsverhältnis des Keramikmaterials zu dem Metallmaterial, zu dem Metallpräkursor bzw. (im Falle der gemeinsamen Verwendung von Metallmaterial und Metallpräkursor) zu der Summe aus dem Metallmaterial und dem Metallpräkursor in der zur Erzeugung der Keramik-Metall-Schicht verwendeten Mischung aus einem Keramikmaterial und einem Metallmaterial und/oder einem Metallpräkursor beträgt nach Gewichtsteilen beispielsweise von ungefähr 5:1 bis ungefähr 30:1, vorzugsweise von ungefähr 15:1 bis ungefähr 25: 1.

Das Mischungsverhältnis des Keramikmaterials zu dem Metallmaterial, zu dem Metallpräkursor bzw. (im Falle der gemeinsamen Verwendung von Metallmaterial und Metallpräkursor) zu der Summe aus dem Metallmaterial und dem Metallpräkursor kann während der Erzeugung der Keramik-Metall-Schicht im wesentlichen konstant gehalten oder aber während der Erzeugung der Keramik-Metall-Schicht variiert werden, um das Mischungsverhältnis des Keramikmaterials zu dem Metallmaterial in der Keramik-Metall-Schicht längs der Schichtdickenrichtung, d.h. in einer senkrecht zu den Hauptflächen der Keramik-Metall-Schicht gerichteten Richtung, zu verändern.

Die Variation des Mischungsverhältnisses kann beispielsweise durch gesteuerte separate Injektion der Komponenten Keramikmaterial und Metallmaterial erfolgen, wobei die Mischung im Spritzstrahl erfolgt.

Wenn die erzeugte nichtleitende Grenzschicht mittels der metallischen Lotschicht mit einem Bauteil des Brennstoffzellenstapels verlötet wird, so ist vorzugsweise vorgesehen, dass das Mischungsverhältnis des Keramikmaterials zu dem Metallmaterial, zu dem Metallpräkursor bzw. (im Fall der gemeinsamen Verbindung von Metallmaterial und Metallpräkursor) zu der Summe aus dem Metallmaterial und dem Metallpräkursor während der Erzeugung der Keramik-Metall-Schicht so variiert wird, dass der Gewichtsanteil des Metallmaterials an der nichtleitenden Grenzschicht mit abnehmendem Abstand von der später aufzubringenden Lotschicht zunimmt.

Die Keramik-Metall-Schicht wird vorteilhafterweise mit einer mittleren Schichtdicke von ungefähr 10 µm bis ungefähr 80 µm, vorzugsweise von ungefähr 20 µm bis ungefähr 60 µm, erzeugt.

Um die elektrische Isolationswirkung der Dichtungsanordnung weiter zu verbessern, kann ferner vorgesehen sein, dass zusätzlich zu der nichtleitenden Grenzschicht eine Isolationsschicht aus einem elektrisch isolierenden Keramikmaterial gebildet wird.

Wenn die nichtleitende Grenzschicht mittels der metallischen Lotschicht mit einem Bauteil des Brennstoffzellenstapels verlötet wird, so wird die Isolationsschicht vorzugsweise so erzeugt, dass sie auf der der Lotschicht abgewandten Seite der nichtleitenden Grenzschicht angeordnet ist.

Als günstig hat es sich erwiesen, wenn die Isolationsschicht durch thermisches Spritzen, insbesondere durch atmosphärisches Plasmaspritzen, durch Vakuumplasmaspritzen oder durch Flammspritzen, erzeugt wird.

Besonders günstig ist es, wenn die Isolationsschicht durch Hochgesch-windigkeitsvakuumplasmaspritzen erzeugt wird, da eine hochgeschwindigkeitsplasmagespritzte Schicht eine besonders hohe Dichte und geringe Porosität aufweist.

Grundsätzlich kann die Isolationsschicht aus jedem keramischen Material gebildet werden, welches bei der Betriebstemperatur des Brennstoffzellenstapels einen ausreichend hohen spezifischen elektrischen Widerstand aufweist.

Zur Erzeugung der Isolationsschicht kann insbesondere ein Keramikmaterial verwendet werden, das Aluminiumoxid und/oder Titandioxid und/oder Zirkoniumdioxid und/oder Magnesiumoxid umfasst.

Vorzugsweise wird zur Erzeugung der Isolationsschicht ein Keramikmaterial verwendet, das einen Aluminium-Magnesium-Spinell umfasst.

Die Isolationsschicht wird vorteilhafterweise mit einer mittleren Schichtdicke von ungefähr 50 µm bis ungefähr 200 µm, vorzugsweise von ungefähr 100 µm bis ungefähr 140 µm, erzeugt.

Um eine Verbindung der Dichtungsanordnung zu angrenzenden Bauteilen, insbesondere metallischen Bauteilen, des Brennstoffzellenstapels herzustellen, ist vorgesehen, dass zusätzlich zu der Keramik-Metall-Schicht eine metallische Lotschicht erzeugt wird.

Insbesondere kann vorgesehen sein, dass diese Lotschicht zumindest teilweise durch thermisches Aufspritzen von Lotmaterial erzeugt wird.

Das Lotmaterial kann auch teilweise durch thermisches Spritzen und teilweise durch ein anderes Verfahren, beispielsweise durch ein Siebdruckverfahren, aufgebracht werden.

Insbesondere kann vorgesehen sein, eine erste Lotkomponente (beispielsweise Kupferoxid und Titanhydrid) durch thermisches Spritzen aufzubringen und später eine zweite Lotkomponente (beispielsweise eine Silberpaste) durch ein Siebdruckverfahren aufzubringen.

In diesem Fall verbinden sich nur dort, wo beide Lotkomponenten aufgebracht worden sind, die Lotkomponenten zu einem Eutektikum, mittels welchem eine Lötverbindung mit einem angrenzenden Bauteil des Brennstoffzellenstapels herstellbar ist.

Als Lotmaterial für die Lotschicht kann insbesondere ein Lot mit mindestens einer reaktiven Komponente (d.h. ein sogenanntes Reaktivlot) eingesetzt werden, welches eine direkte Verlötung einer keramikhaltigen Schicht mit metallischen Bauteilen des Brennstoffzellenstapels gestattet.

Geeignet sind auch sogenannte Aktivlote, welche aktive Elemente, wie beispielsweise Titan, Zirkonium, Hafnium, Niob, Tantal, Silizium, Cer oder Vanadium, enthalten.

Ein solches Lot ist unter der Bezeichnung Copper ABA von der Firma Wesgo Metals, 610 Quarry Road, San Carlos, CA 94070, USA oder von der Firma Wesgo Metals, 2425 Whipple Road, Hayward, CA 94544, USA, erhältlich.

Dieses Aktivlot hat die folgende Zusammensetzung: 2 Gewichts-Prozent Al; 92,7 Gewichts-Prozent Cu; 3 Gewichts-Prozent Si; 2,3 Gewichts-Prozent Ti.

Zur Erzeugung der Lotschicht kann auch beispielsweise ein Silberbasislot verwendet werden.

Ein solches Silberbasislot kann mit oder ohne Zusatz von elementarem Kupfer verwendet werden.

Wenn das Silberbasislot ohne Zusatz von elementarem Kupfer verwendet wird, so ist es günstig, wenn das Silberbasislot einen Zusatz von Kupferoxid enthält, da durch den Zusatz von Kupferoxid das Silberbasislot Keramikoberflächen besser benetzt.

Ferner kann das Silberbasislot einen Titanzusatz zur Verbesserung der Benetzung umfassen.

Zur Verringerung der Anzahl der verschiedenen Bauteile des Brennstoffzellenstapels ist es günstig, wenn die die nichtleitende Grenzschicht umfassende Dichtungsanordnung als eine Beschichtung auf einem, vorzugsweise metallischen, Bauteil einer Brennstoffzelleneinheit des Brennstoffzellenstapels ausgebildet wird.

Ferner kann vorgesehen sein, dass die die nichtleitende Grenzschicht umfassende Dichtungsanordnung mit einem, vorzugsweise metallischen, Bauteil einer Brennstoffzelleneinheit des Brennstoffzellenstapels verlötet wird.

Bei einer bevorzugten Ausgestaltung des erfindungsgemäßen Verfahrens ist vorgesehen, dass das Metall der Keramik-Metall-Schicht zumindest teilweise in nichtleitendes Metalloxid umgewandelt wird.

Insbesondere kann vorgesehen sein, dass das Metall der Keramik-Metall-Schicht bei einem Lötvorgang in einer sauerstoffhaltigen Atmosphäre zumindest teilweise in nichtleitendes Metalloxid umgewandelt wird.

Der vorliegenden Erfindung liegt die weitere Aufgabe zugrunde, eine Dichtungsanordnung für einen Brennstoffzellenstapel der eingangs genannten Art zu schaffen, welche auch bei einer hohen Betriebstemperatur des Brennstoffzellenstapels eine ausreichende elektrische Isolationswirkung und eine ausreichende mechanische Festigkeit aufweist.

Diese Aufgabe wird bei einer Dichtungsanordnung für einen Brennstoffzellenstapel, der mehrere Brennstoffzelleneinheiten umfasst, welche längs einer Stapelrichtung aufeinanderfolgen, wobei die Dichtungsanordnung eine elektrische Isolationswirkung aufweist, erfindungsgemäß dadurch gelöst, dass die Dichtungsanordnung mindestens eine aus einer Mischung eines Keramikmaterials und einer bei einem Lötvorgang in einer sauerstoffhaltigen Atmosphäre in situ aus einem Metall gebildeten nichtleitenden Metallverbindung gebildete nichtleitende Grenzschicht und zusätzlich zu der nichtleitenden Grenzschicht eine metallische Lotschicht umfasst.

Besondere Ausgestaltungen einer solchen Dichtungsanordnung sind Gegenstand der Ansprüche 33 bis 56, deren Vorteile bereits vorstehend im Zusammenhang mit den besonderen Ausgestaltungen des erfindungsgemäßen Verfahrens erläutert worden sind.

Anspruch 57 ist auf einen Brennstoffzellenstapel gerichtet, welcher mehrere Brennstoffzelleneinheiten, welche längs einer Stapelrichtung aufeinanderfolgen, und mindestens eine erfindungsgemäße Dichtungsanordnung umfasst.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Explosionsdarstellung der Elemente einer Brennstoffzelleneinheit;
- Fig. 2: eine schematische Explosionsdarstellung der Brennstoffzelleneinheit aus Fig. 1, nachdem eine KEA(Kathoden-Elektrolyt-Anoden)-Einheit der Brennstoffzelleneinheit mit einem Gehäuseoberteil der Brennstoffzelleneinheit verlötet worden ist;
- Fig. 3: eine schematische Explosionsdarstellung der Brennstoffzelleneinheit aus Fig. 2, nachdem ein Zwischenelement der Brennstoffzelleneinheit mit einem Gehäuseunterteil der Brennstoffzelleneinheit verlötet worden ist;
- Fig. 4: eine schematische Explosionsdarstellung der Brennstoffzelleneinheit aus Fig. 3, nachdem das Gehäuseoberteil und das Gehäuseunterteil miteinander verschweißt worden sind, und einer weiteren, in der Stapelrichtung eines Brennstoffzellenstapels unter dieser ersten Brennstoffzelleneinheit angeordneten zweiten Brennstoffzelleneinheit gleichen Aufbaus;
- Fig. 5: eine schematische perspektivische Darstellung der beiden Brennstoffzelleneinheiten aus Fig. 4, nachdem das Zusatzelement der ersten Brennstoffzelleneinheit mit dem Gehäuseoberteil der zweiten Brennstoffzelleneinheit verschweißt worden ist;
- Fig. 6: eine schematische Draufsicht von oben auf einen Brennstoffzellenstapel;
- Fig. 7: eine ausschnittsweise, im Bereich eines Brenngaskanals teilweise geschnittene perspektivische Ansicht des Brennstoffzellenstapels;
- Fig. 8: einen schematischen vertikalen Schnitt durch den Brennstoffzellenstapel im Bereich eines Brenngaskanals, längs der Linie 8 - 8 in Fig. 6;
- Fig. 9: einen Ausschnitt aus Fig. 8, welcher einen vertikalen Schnitt durch nur eine Brennstoffzelleneinheit des Brennstoffzellenstapels zeigt;
- Fig. 10: eine vergrößerte Explosionsdarstellung des Bereichs I aus Fig. 9;
- Fig. 11: eine ausschnittsweise, im Bereich eines Oxidationsmittelkanals teilweise geschnittene perspektivische Darstellung des Brennstoffzellenstapels;
- Fig. 12: einen schematischen vertikalen Schnitt durch den Brennstoffzellenstapel im Bereich eines Oxidationsmittelkanals, längs der Linie 12 - 12 in Fig. 6;
- Fig. 13: einen Ausschnitt aus Fig. 12, welcher einen vertikalen Schnitt durch nur eine Brennstoffzelleneinheit des Stapels zeigt;
- Fig. 14: eine ausschnittsweise, in einem Bereich außerhalb der Fluidkanäle teilweise geschnittene perspektivische Darstellung des Brennstoffzellenstapels;
- Fig. 15: einen schematischen vertikalen Schnitt durch den Brennstoffzellenstapel in einem Bereich außerhalb der Fluidkanäle, längs der Linie 15 - 15 in Fig. 6; und
- Fig. 16: einen Ausschnitt aus Fig. 15, der nur eine der Brennstoffzelleneinheiten des Brennstoffzellenstapels zeigt.

Gleiche oder funktional äquivalente Elemente sind in allen Figuren mit denselben Bezugszeichen bezeichnet.

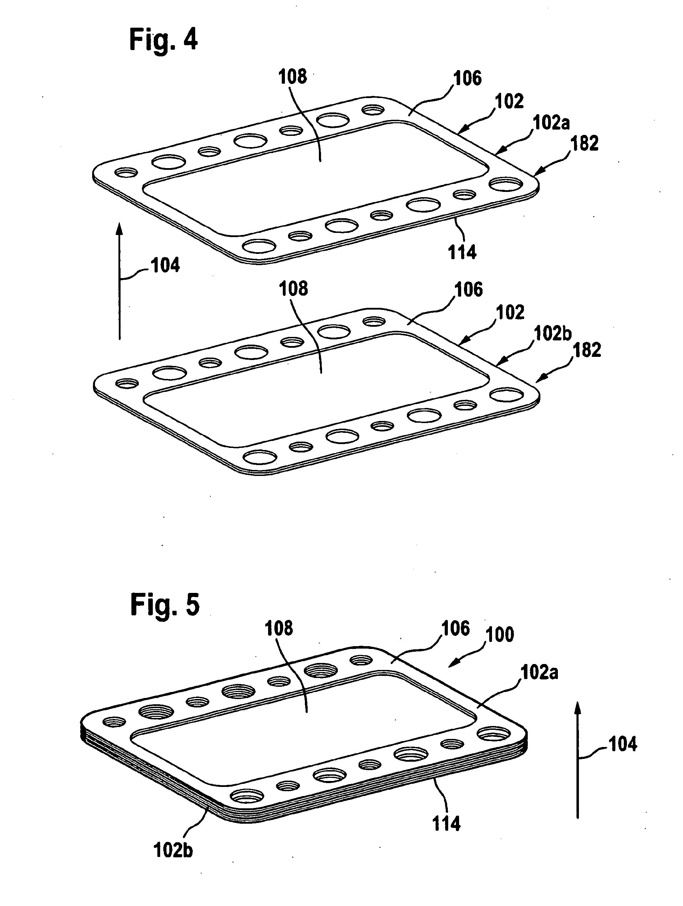

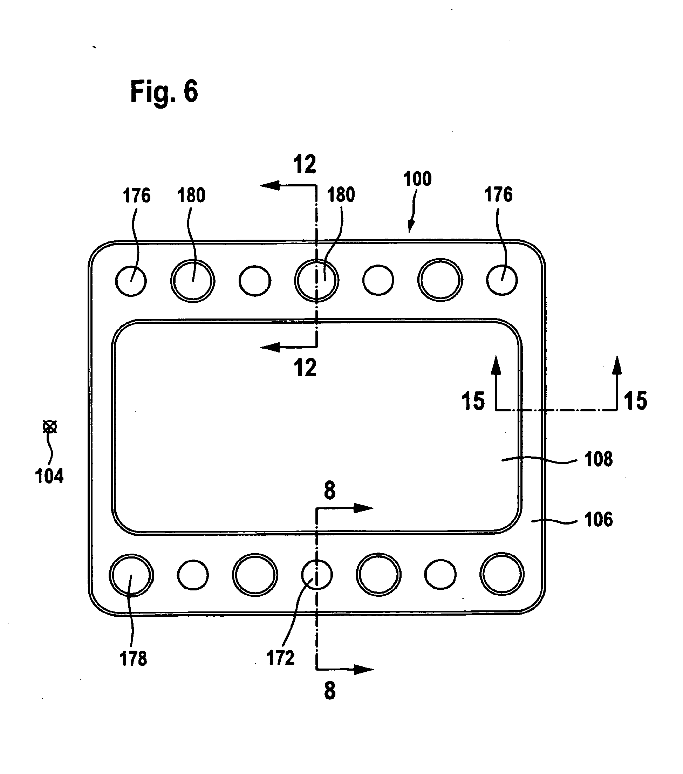

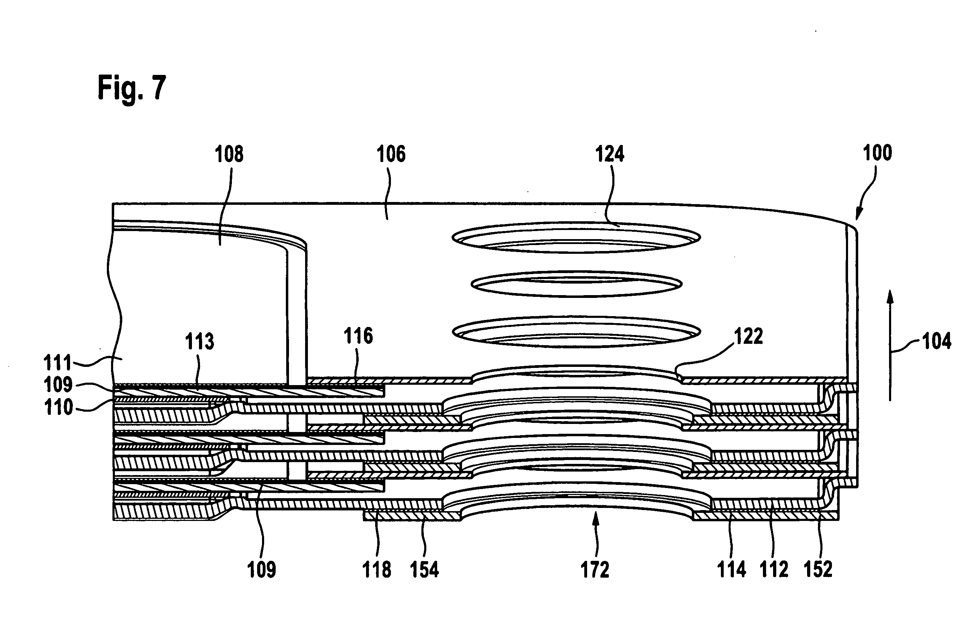

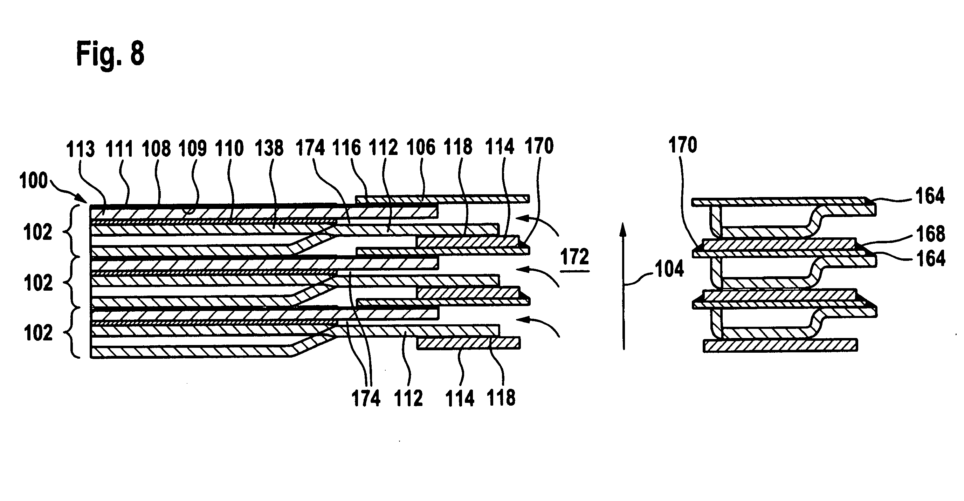

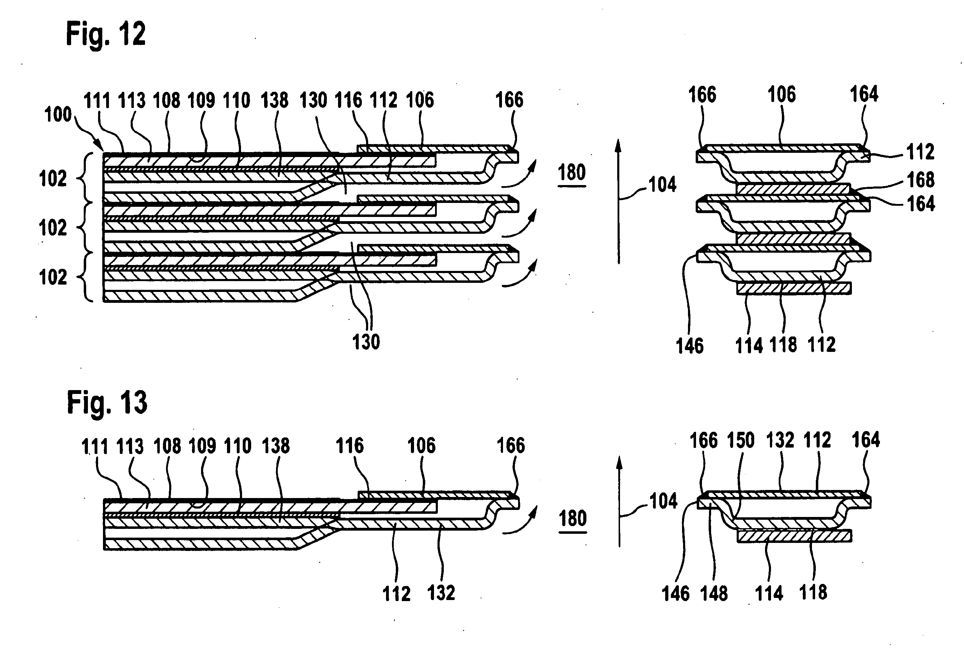

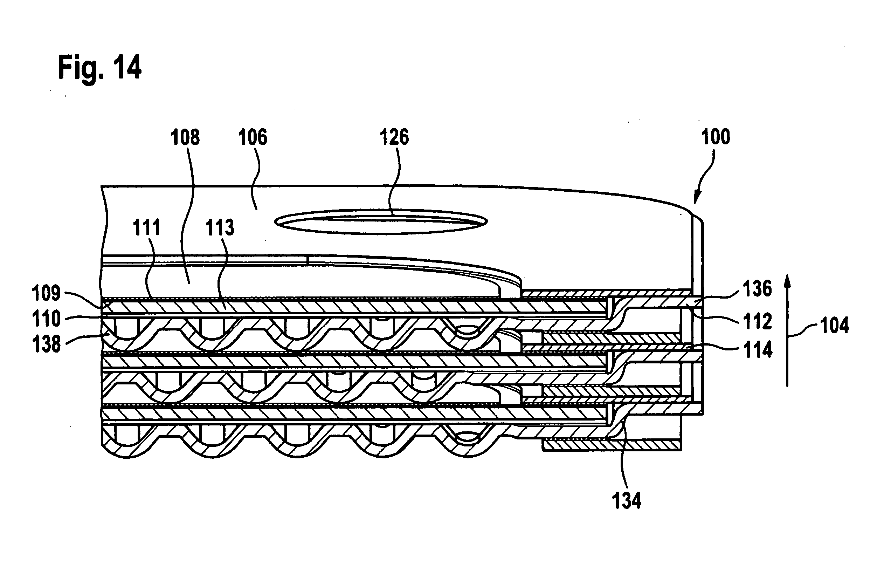

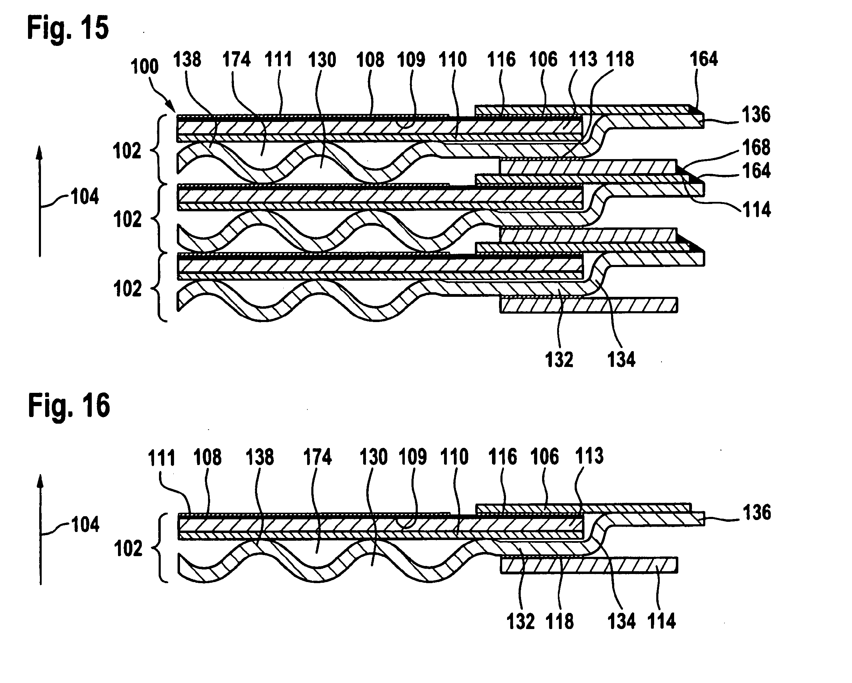

Ein in den Fig. 5 bis 16 dargestellter, als Ganzes mit 100 bezeichneter Brennstoffzellenstapel umfasst mehrere Brennstoffzelleneinheiten 102 von jeweils gleichem Aufbau, welche längs einer vertikalen Stapelrichtung 104 aufeinandergestapelt sind.

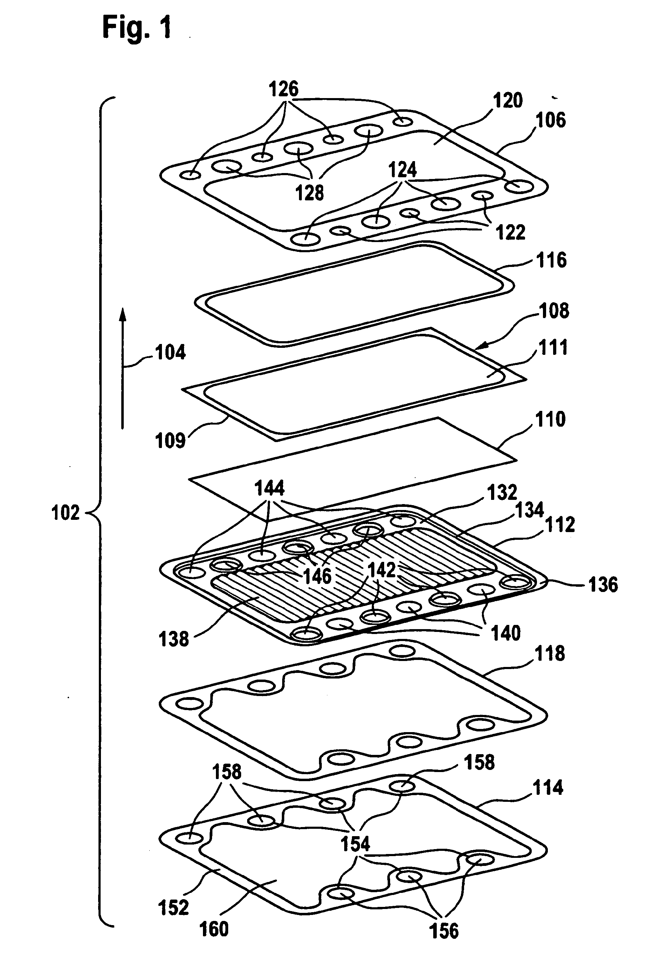

Jede der Brennstoffzelleneinheiten 102 umfasst die in Fig. 1 einzeln dargestellten Bestandteile, nämlich ein Gehäuseoberteil 106, eine Kathoden-Elektrolyt-Anoden-Einheit (KEA-Einheit) 108, ein Kontaktmaterial 110, ein Gehäuseunterteil 112 und ein Zwischenelement 114.

Ferner ist in Fig. 1 eine Lötschicht 116 zum Verlöten der KEA-Einheit 108 mit dem Gehäuseoberteil 106 und eine Dichtungsanordnung 118 zum gasdichten und elektrisch isolierenden Verbinden des Zwischenelements 114 mit dem Gehäuseunterteil 112 dargestellt.

Das Gehäuseoberteil 106 ist als eine im wesentlichen rechteckige und im wesentlichen ebene Blechplatte ausgebildet, welche mit einer im wesentlichen rechteckigen mittigen Durchtrittsöffnung 120 versehen ist, durch welche im fertig montierten Zustand der Brennstoffzelleneinheit die KEA-Einheit 108 der Brennstoffzelleneinheit 102 für eine Kontaktierung durch das Gehäuseunterteil 112 der in der Stapelrichtung 104 darüberliegenden Brennstoffzelleneinheit 102 zugänglich ist.

Auf der einen Seite der Durchtrittsöffnung 120 ist das Gehäuseoberteil 106 mit mehreren, beispielsweise drei, Brenngaszuführöffnungen 122 versehen, welche im Wechsel mit mehreren, beispielsweise vier, Oxidationsmittelzuführöffnungen 124 angeordnet sind.

Auf der gegenüberliegenden Seite der Durchtrittsöffnung 120 ist das Gehäuseoberteil 106 mit mehreren, beispielsweise vier, Brenngasabführöffnungen 126 versehen, die im Wechsel mit mehreren, beispielsweise drei, Oxidationsmittelabführöffnungen 128 angeordnet sind.

Das Gehäuseoberteil 106 ist vorzugsweise aus einem hochkorrosionsbeständigen Stahl, beispielsweise aus der Legierung Crofer 22, hergestellt.

Der Werkstoff Crofer 22 hat die folgende Zusammensetzung:

22 Gewichts-Prozent Chrom, 0,6 Gewichts-Prozent Aluminium, 0,3 Gewichts-Prozent Silizium, 0,45 Gewichts-Prozent Mangan, 0,08 Gewichts-Prozent Titan, 0,08 Gewichts-Prozent Lanthan, Rest Eisen.

Dieser Werkstoff wird von der Firma ThyssenKrupp VDM GmbH, Plettenberger Straße 2, 58791 Werdohl, Deutschland, vertrieben.

Die KEA-Einheit 108 umfasst eine Anode 113, einen über der Anode 113 angeordneten Elektrolyten 109 und eine über dem Elektrolyten 109 angeordnete Kathode 111.

Die Anode 113 ist aus einem bei der Betriebstemperatur der BrennstofFzelleneinheit (von ungefähr 800 °C bis ungefähr 900 °C) elektrisch leitfähigen keramischen Material, beispielsweise aus ZrO₂ oder aus einem Ni/ZrO₂-Cermet (Keramik-Metall-Gemisch), gebildet, welches porös ist, um einem Brenngas den Durchtritt durch die Anode 113 zu dem an die Anode 113 angrenzenden Elektrolyten 109 zu ermöglichen.

Als Brenngas kann beispielsweise ein kohlenwasserstoffhaltiges Gasgemisch oder reiner Wasserstoff verwendet werden.

Der Elektrolyt 109 ist vorzugsweise als Feststoffelektrolyt, insbesondere als Feststoffoxid-Elektrolyt, ausgebildet und besteht beispielsweise aus Yttriumstabilisiertem Zirkoniumdioxid.

Der Elektrolyt 109 ist bei Normal- wie bei Betriebstemperatur elektronisch nichtleitend. Hingegen nimmt seine ionische Leitfähigkeit mit steigender Temperatur zu.

Die Kathode 111 ist aus einem bei der Betriebstemperatur der Brennstoffzelleneinheit elektrisch leitfähigen keramischen Material, beispielsweise aus (La_{0,8}Sr_{0,2})_{0,98}MnO₃, gebildet und porös, um einem Oxidationsmittel, beispielsweise Luft oder reinem Sauerstoff, aus einem an die Kathode 111 angrenzenden Oxidationsmittelraum 130 den Durchtritt zu dem Elektrolyten 109 zu ermöglichen.

Der gasdichte Elektrolyt 109 der KEA-Einheit 108 erstreckt sich bis zum Rand der gasdurchlässigen Anode 113 und über den Rand der gasdurchlässigen Kathode 111 hinaus.

Das Kontaktmaterial 110, das zwischen der KEA-Einheit 108 und dem Gehäuseunterteil 112 angeordnet ist, kann beispielsweise als ein Netz, Gestrick oder Vlies aus Nickeldraht ausgebildet sein.

Das Gehäuseunterteil 112 ist als ein Blechformteil ausgebildet und umfasst eine im wesentlichen rechteckige, senkrecht zu der Stapelrichtung 104 ausgerichtete Platte 132, welche an ihren Rändern über eine Schräge 134 in einen ebenfalls im wesentlichen senkrecht zu der Stapelrichtung 104 ausgerichteten Randflansch 136 übergeht.

Die Platte 132 weist ein im wesentlichen rechteckiges, mittiges Kontaktfeld 138 auf, welches mit Kontaktelementen zur Kontaktierung des Kontaktmaterials 110 einerseits und der Kathode 111 einer KEA-Einheit 108 einer benachbarten Brennstoffzelleneinheit 102 andererseits mit Kontaktelementen versehen ist, welche beispielsweise wellblechförmig oder noppenförmig ausgebildet seien können.

Auf der einen Seite des Kontaktfeldes 138 ist die Platte 132 mit mehreren, beispielsweise drei, Brenngaszuführöffnungen 140 versehen, welche im Wechsel mit mehreren, beispielsweise vier, Oxidationsmittelzuführöffnungen 142 angeordnet sind.

Die Brenngaszuführöffnungen 140 und die Oxidationsmittelzuführöffnungen 142 des Gehäuseunterteils 112 fluchten mit den Brenngaszuführöffnungen 122 bzw. den Oxidationsmittelzuführöffnungen 124 des Gehäuseoberteils 106.

Auf der anderen Seite des Kontaktfeldes 138 ist die Platte 132 mit mehreren beispielsweise vier, Brenngasabführöffnungen 144 versehen, welche im Wechsel mit mehreren, beispielsweise drei, Oxidationsmittelabführöffnungen 146 angeordnet sind.

Die Brenngasabführöffnungen 144 und die Oxidationsmittelabführöffnungen 146 des Gehäuseunterteils 112 fluchten mit den Brenngasabführöffnungen 126 bzw. mit den Oxidationsmittelabführöffnungen 128 des Gehäuseoberteils 106.

Die Oxidationsmittelabführöffnungen 146 liegen vorzugsweise den Brenngaszuführöffnungen 140 gegenüber, und die Brenngasabführöffnungen 144 liegen vorzugsweise den Oxidationsmittelzuführöffnungen 142 gegenüber.

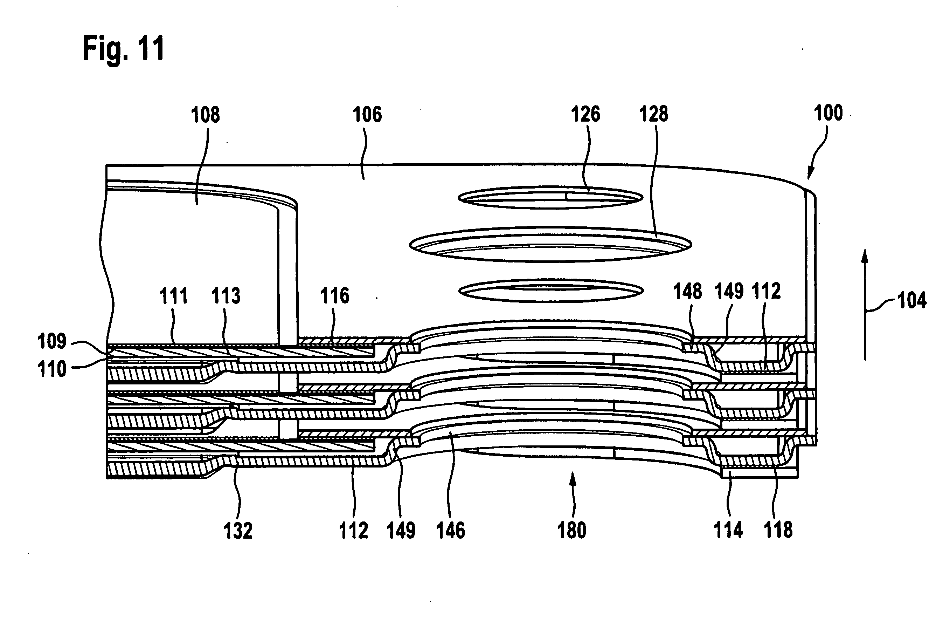

Wie am besten aus den Fig. 11 bis 13 zu ersehen ist, sind die Oxidationsmittelabführöffnungen 146 (ebenso wie die Oxidationsmittelzuführöffnungen 142) des Gehäuseunterteils 112 von jeweils einem die betreffende Öffnung ringförmig umgebenden, im wesentlichen senkrecht zur Stapelrichtung 104 ausgerichteten Ringflansch 148 umgeben, welcher über eine Schräge 149 mit der Platte 132 des Gehäuseunterteils 112 verbunden ist.

Das Gehäuseunterteil 112 ist vorzugsweise aus einem hochkorrosionsbeständigen Stahl, beispielsweise aus der vorstehend bereits genannten Legierung Crofer 22, hergestellt.

Das Zwischenelement 114 umfasst einen im wesentlichen rechteckigen Rahmenteil 152, der sich ringförmig längs des Randes der Brennstoffzelleneinheit 102 erstreckt, sowie einstückig mit dem Rahmenteil 152 verbundene Kanalbegrenzungsteile 154, welche so ausgebildet sind, dass sie zusammen mit dem Rahmenteil 152 jeweils eine Brenngaszuführöffnung 156 bzw. jeweils eine Brenngasabführöffnung 158 des Zwischenelements 114 umschließen.

Die Brenngaszuführöffnungen 156 und die Brenngasabführöffnungen 158 des Zwischenelements 114 fluchten mit den Brenngaszuführöffnungen 140 bzw. den Brenngasabführöffnungen 144 des Gehäuseunterteils 112 sowie mit den Brenngas-Zuführöffnungen 122 bzw. mit den Brenngasabführöffnungen 126 des Gehäuseoberteils 106.

Das Zwischenelement 114 ist aus einem im wesentlichen ebenen Blech durch Ausstanzen der Brenngaszuführöffnungen 156 und der Brenngasabführöffnungen 158 sowie einer mittigen Durchtrittsöffnung 160 hergestellt.

Als Material für das Zwischenelement 114 wird vorzugsweise ein hochkorrosionsbeständiger Stahl, beispielsweise die bereits vorstehend genannte Legierung Crofer 22 oder FeCrAIY, verwendet.

Die Zusammensetzung der FeCrAIY-Legierung ist die folgende: 30 Gewichts-Prozent Chrom; 5 Gewichts-Prozent Aluminium; 0,5 Gewichts-Prozent Yttrium; Rest Eisen.

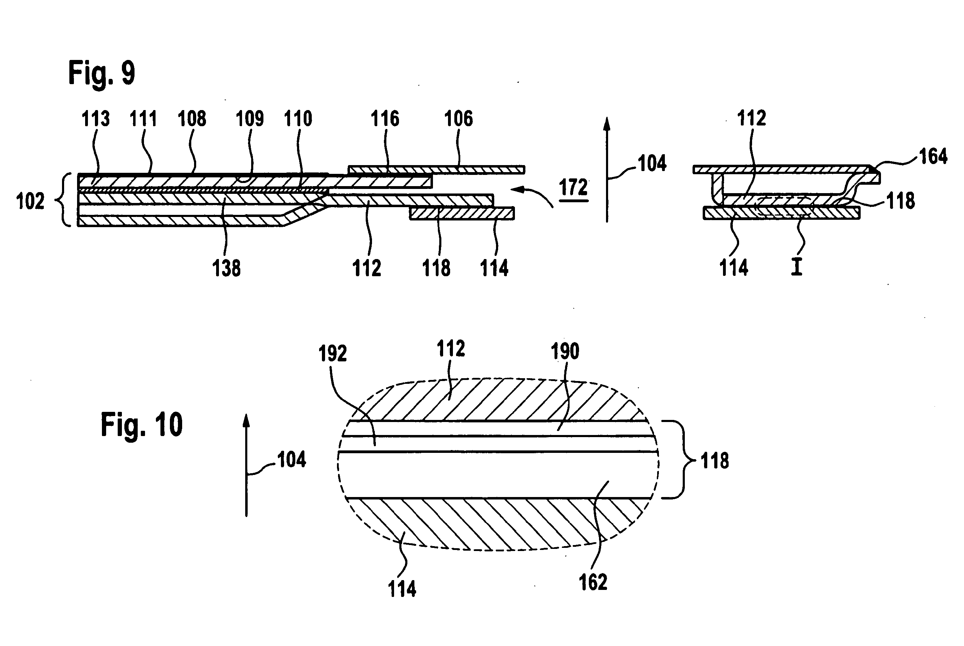

Wie aus Fig. 10 zu ersehen ist, ist das Zwischenelement 114 an seiner dem Gehäuseunterteil 112 zugewandten Oberseite mit einer mehrschichtigen Dichtungsanordnung 118 versehen.

Die Dichtungsanordnung 118 umfasst eine direkt auf der Oberseite des Zwischenelements 114 angeordnete Isolationsschicht 162, eine auf der dem Zwischenelement 114 abgewandten Oberseite der Isolationsschicht 162 angeordnete nichtleitende Grenzschicht 192 und eine auf der der Isolationsschicht 162 abgewandten Oberseite der nichtleitenden Grenzschicht 192 angeordnete Lotschicht 190.

Die direkt auf die Oberseite des Zwischenelements 114 aufgebrachte Isolationsschicht 162 besteht aus thermisch aufgespritzter Keramik, beispielsweise aus einem Aluminium-Magnesium-Spinell.

Die Isolationsschicht 162 kann alternativ oder ergänzend zum Aufbringen auf die Oberseite des Zwischenelements 114 auch auf die Unterseite des Gehäuseunterteils 112 aufgebracht werden.

Zum Aufbringen dieser elektrisch isolierenden Isolationsschicht 162 auf die Oberseite des Zwischenelements 114 oder die Unterseite des Gehäuseunterteils 112 sind beispielsweise das atmosphärische Plasmaspritzen, das Vakuumplasmaspritzen oder das Flammspritzen geeignet. Besonders geeignet ist das Hochgeschwindigkeitsvakuumplasmaspritzen (High Velocity Vacuum Plasma Spraying, HV-VPS).

Bei diesen Verfahren wird die mit der Isolationsschicht 162 zu beschichtende Oberfläche des Zwischenelements 114 vorzugsweise mehrfach mittels eines Spritzstrahls abgefahren, wobei sich bei jedem Abfahren jeweils eine Lage thermisch aufgespritzter Keramik bildet.

Die Schichtdicke der elektrisch isolierenden Isolationsschicht 162 beträgt beispielsweise 50 µm bis 200 µm, vorzugsweise 100 µm bis 140 µm.

Die Isolationsschicht 162 kann beispielsweise durch mehrmaliges Abfahren der zu beschichtenden Oberfläche des Zwischenelements 114 gebildet werden, wobei dann die Isolationsschicht 162 aus mehreren übereinander abgeschiedenen Lagen des thermisch aufgespritzten Keramikmaterials besteht.

Die auf der Isolationsschicht 162 angeordnete nichtleitende Grenzschicht 192 der Dichtungsanordnung 118 ist als eine thermisch aufgespritzte Cermet-Schicht ausgebildet, deren Metallanteil in situ in eine nichtleitende Metallverbindung umgewandelt worden ist.

Zur Herstellung der nichtleitenden Grenzschicht 192 wird beispielsweise wie folgt vorgegangen:

Zunächst wird aus einer Mischung aus einem pulverförmigen Keramikmaterial und einem pulverförmigen Metallpräkursor durch thermisches Aufspritzen auf der Isolationsschicht 162 eine Keramik-Metall-Schicht erzeugt.

Unter einem Metallpräkursor ist dabei eine Metallverbindung zu verstehen, welche bei der Arbeitstemperatur des thermischen Spritzverfahrens in ihren metallischen Anteil und ihren nicht-metallischen Anteil zerfällt, so dass der Metallanteil der Verbindung in der Keramik-Metall-Schicht in metallischer Form vorliegt.

Als Metallpräkursor wird vorzugsweise eine thermisch instabile, bei der Arbeitstemperatur des thermischen Spritzverfahrens zerfallende Verbindung eines aktiven Metalls verwendet.

Unter einem "aktiven Metall" ist dabei ein grenzflächenaktives Metall zu verstehen, wie es Aktivloten (metallischen Legierungen) in geringen Mengen zugefügt wird, um die Grenzflächenenergie zwischen einem keramischen Material und der Lotschmelze so weit herabzusetzen, dass eine Benetzung des keramischen Materials durch das Lot erfolgen kann.

Solche "aktiven Metalle" sind insbesondere die Metalle der Gruppe Titan, Zirkonium, Hafnium, Niob und Tantal.

Als Metallpräkursor eignen sich insbesondere Hydride dieser aktiven Metalle.

Soll Titan in die Keramik-Metall-Schicht eingebracht werden, so wird als Metallpräkursor vorzugsweise Titanhydrid verwendet, welches ab einer Temperatur von ungefähr 400°C in metallisches Titan und Wasserstoff zerfällt. Auf der Isolationsschicht 162 entsteht durch das thermische Aufspritzen in diesem Fall also eine Keramik-Titan-Schicht.

Alternativ oder ergänzend zu Titanhydrid kann auch elementares Titan verwendet werden.

Soll Zirkonium in die Keramik-Metall-Schicht eingebracht werden, so wird als Metallpräkursor vorzugsweise Zirkoniumhydrid verwendet. Auf der Isolationsschicht 162 entsteht durch das thermische Aufspritzen in diesem Fall eine Keramik-Zirkonium-Schicht.

Als pulverförmiges Keramikmaterial für die Bildung der Keramik-Metall-Schicht können beispielsweise Yttrium-stabilisiertes Zirkoniumdioxid (mit einem in mol-% gemessenen Yttrium-Anteil zwischen 3 % und 12 %, bevorzugt zwischen 5 % und 8 %) oder ein Aluminium-Magnesium-Spinell verwendet werden.

Das Mischungsverhältnis zwischen den Gewichtsanteilen des Keramikmaterials und des Metallpräkursors (insbesondere Titanhydrid oder Zirkoniumhydrid) liegt beispielsweise im Bereich von 5:1 bis 30:1, vorzugsweise im Bereich von 15: 1 bis 25:1. Besonders günstig ist ein Mischungsverhältnis von 20: 1.

Die Schichtdicke der Keramik-Metall-Schicht liegt beispielsweise im Bereich von 10 µm bis 80 µm, vorzugsweise im Bereich von 20 µm bis 60 µm.

Zum thermischen Aufspritzen der Keramik-Metall-Schicht auf die dem Zwischenelement 114 abgewandte Oberseite der Isolationsschicht 162 sind beispielsweise das atmosphärische Plasmaspritzen, das Vakuumplasmaspritzen oder das Flammspritzen geeignet. Besonders geeignet ist das Hochgeschwindigkeitsvakuumplasmaspritzen (High Velocity Vacuum Plasma Spraying, HV-VPS).

Auch die Keramik-Metall-Schicht wird vorzugsweise so hergestellt, dass mit einem Spritzstrahl die zu beschichtende Oberseite der Isolationsschicht 162 mehrfach abgefahren wird, wobei mehrere Lagen der Keramik-Metall-Schicht gebildet werden.

Bei jedem Abfahren der zu beschichtenden Fläche kann dabei das Mischungsverhältnis zwischen dem Keramikmaterial und dem Metallpräkursor so geändert werden, dass ein längs der Schichtdickenrichtung (parallel zur Stapelrichtung 104) verlaufender Mischungsverhältnisgradient entsteht.

Dieser Mischungsverhältnisgradient ist so gerichtet, dass der Gewichtsanteil des Metalls am gesamten Material der Keramik-Metall-Schicht mit wachsendem Abstand von der Oberseite der Isolationsschicht 162 zunimmt.

Bei einer späteren Verlötung der so hergestellten Keramik-Metall-Schicht mit der Unterseite des Gehäuseunterteils 112 in Luftatmosphäre oder in einem Vakuum mit noch vorhandenem Sauerstoffpartialdruck wandelt sich der Metallanteil der Keramik-Metall-Schicht in ein nichtleitendes Metalloxid um, so dass sich aus der Keramik-Metall-Schicht die nichtleitende Grenzschicht 192 bildet. Dadurch entsteht eine Lötverbindung mit hoher mechanischer Festigkeit und mit hohem elektrischem Widerstand.

Aufgrund der guten elektrischen Isolationswirkung der nichtleitenden Grenzschicht 192 ist es nicht erforderlich, die Isolationsschicht 162 seitlich über die nichtleitende Grenzschicht 192 überstehen zu lassen, um die Entstehung eines Kurzschlusses zu vermeiden.

Vielmehr können die Isolationsschicht 162 und die Keramik-Metall-Schicht, aus welcher dann später die nichtleitende Grenzschicht 192 hervorgeht, miteinander deckungsgleich, unter Verwendung derselben Beschichtungsmasken, erzeugt werden. Dadurch vermindert sich der apparative Aufwand für die Herstellung der Dichtungsanordnung 118.

Wenn die Keramik-Metall-Schicht metallisches Titan enthält, so wandelt sich dasselbe bei der Verlötung in der sauerstoffhaltigen Atmosphäre in nichtleitendes Titandioxid um.

Für die Verlötung der Keramik-Metall-Schicht mit dem Gehäuseunterteil 112 und zur Herstellung der Lotschicht 190 kann beispielsweise ein Silberbasislot verwendet werden.

Insbesondere kann als Lotmaterial ein Silberbasislot mit Zusatz von elementarem Kupfer verwendet werden, beispielsweise ein Silberbasislot mit der Zusammensetzung (in mol-%): Ag-4Cu oder Ag-8Cu.

Die Verlötung dieses Lotmaterials mit der Unterseite des Gehäuseunterteils 112 und mit der Keramik-Metall-Schicht erfolgt in einer Luftatmosphäre. Die Löttemperatur liegt im Bereich von ungefähr 980°C bis ungefähr 1.050°C, die Lötdauer beträgt beispielsweise ungefähr 5 Minuten. Bei der Lötung in Luft bilden sich in situ Kupferoxid und ein Oxid des in der Keramik-Metall-Schicht enthaltenen Metalls.

Alternativ hierzu kann als Lotmaterial auch ein Silberbasislot ohne Zusatz von elementarem Kupfer gebildet werden. Ein solches kupferfreies Lot bietet den Vorteil einer höheren Solidustemperatur (diese beträgt ohne Kupferzusatz ungefähr 960°C, mit Kupferzusatz ungefähr 780°C). Da reines Silber Keramikoberflächen nicht benetzt, wird den Silberbasisloten ohne Kupferzusatz Kupfer(II)oxid zur Verkleinerung des Randwinkels zugesetzt. Die Lötung mit Silberbasisloten ohne Kupferzusatz erfolgt in einer Luftatmosphäre oder im Vakuum mit noch vorhandenem Sauerstoffpartialdruck.

Geeignete Silberbasislote ohne Zusatz von elementarem Kupfer haben beispielsweise die Zusammensetzung (in mol-%): Ag-4CuO oder Ag-8CuO.

Zur weiteren Verbesserung der Benetzung (Verkleinerung des Randwinkels) kann ein Zusatz von Titan zu dem Lotmaterial dienen. Zur Herstellung der Lote wird ein inniges Gemenge der entsprechenden Komponenten in Pulverform verwendet. Aus diesem Gemenge bildet sich in situ die Lotlegierung. Das Titan wird diesem Gemenge in Form von Titanhydrid zugesetzt. Aus dem Hydrid bildet sich bei ungefähr 400°C metallisches Titan.

Geeignete Silberbasislote ohne Zusatz von elementarem Kupfer, aber mit Zusatz von Titan haben beispielsweise die Zusammensetzung (in mol-%): Ag-4CuO-0,5Ti oder Ag-8CuO-0,5Ti.

Die Löttemperatur beträgt auch in diesem Fall vorzugsweise ungefähr 980°C bis ungefähr 1.050°C, die Lötdauer beispielsweise ungefähr 5 Minuten.

Ferner können für die Verlötung auch Aktivlote verwendet werden.

Aktivlote sind metallische Legierungen, die grenzflächenaktive Elemente (z.B. Titan, Zirkonium, Hafnium, Niob und/oder Tantal) in geringen Mengen enthalten und somit in der Lage sind, die Grenzflächenenergie zwischen einem keramischen Material und der Lotschmelze so weit herabzusetzen, dass eine Benetzung des keramischen Materials durch das Lot erfolgen kann.

Die Aktivlöttechnik unter Verwendung von Aktivloten ermöglicht die Herstellung von Keramik-/Keramik-Metall-Verbunden in einem einstufigen Fügeprozess, ohne vorhergehende Metallisierung der Keramikfügeflächen. Die Benetzung der Keramikfügeflächen durch das Lot wird hierbei durch die Verwendung eines Aktivlots sichergestellt.

Ein geeignetes Aktivlot wird beispielsweise unter der Bezeichnung Copper ABA von der Firma Wesgo Metals, 610 Quarry Road, San Carlos, CA 94070, USA, oder von der Firma Wesgo Metals, 2425 Whipple Road, Hayward, CA 94544, USA, vertrieben.

Dieses Aktivlot hat die folgende Zusammensetzung: 2 Gewichts-Prozent Al; 92,7 Gewichts-Prozent Cu; 3 Gewichts-Prozent Si; 2,3 Gewichts-Prozent Ti.

Dieses Aktivlot wird vorzugsweise bei einer Löttemperatur von ungefähr 1.030°C bis ungefähr 1.080°C eingesetzt.

Dadurch, dass die Dichtungsanordnung 118 die zwischen der Lotschicht 190 und der Isolationsschicht 162 angeordnete nichtleitende Grenzschicht 192 aufweist, treten keine Kurzschlüsse durch in die Isolationsschicht 162 eingedrungenes Lot auf, so dass die Dichtungsanordnung 118 ihre elektrische Isolationsfunktion einwandfrei ausüben kann.

Zur Herstellung der in Fig. 4 dargestellten Brennstoffzelleneinheiten 102 aus den vorstehend beschriebenen Einzelelementen wird wie folgt vorgegangen:

Zunächst wird das Zwischenelement 114 auf die vorstehend beschriebene Weise mit der Isolationsschicht 162 und der Keramik-Metall-Schicht, welche noch nicht oxidiertes Metallmaterial enthält, versehen.

Anschließend wird der Elektrolyt 109 der KEA-Einheit 108 längs des Randes seiner Oberseite mit dem Gehäuseoberteil 106 verlötet, und zwar an der Unterseite des die Durchtrittsöffnung 120 in dem Gehäuseoberteil 106 umgebenden Bereiches des Gehäuseoberteils 106.

Das hierfür benötigte Lötmaterial kann, wie in Fig. 1 dargestellt, als entsprechend zugeschnittene Lötfolie 116 zwischen den Elektrolyten 109 und das Gehäuseoberteil 106 eingelegt werden oder aber mittels eines Dispensers in Form einer Lötmaterialraupe auf die Oberseite des Elektrolyten 109 und/oder auf die Unterseite des Gehäuseoberteils 106 aufgetragen werden. Ferner ist es auch möglich, das Lötmaterial mittels eines Musterdruckverfahrens, beispielsweise eines Siebdruckverfahrens, auf die Oberseite des Elektrolyten 109 und/oder auf die Unterseite des Gehäuseoberteils 106 aufzubringen.

Als Lötmaterial kann ein Silberbasislot mit Kupferzusatz verwendet werden, beispielsweise ein Silberbasislot mit der Zusammensetzung (in mol-%): Ag4Cu oder Ag8Cu.

Die Lötung erfolgt in einer Luftatmosphäre. Die Löttemperatur beträgt beispielsweise 1050 °C, die Lötdauer beispielsweise ungefähr 5 Minuten. Bei der Lötung in Luft bildet sich in situ Kupferoxid.

Alternativ hierzu kann als Lötmaterial auch ein Silberbasislot ohne Kupferzusatz verwendet werden. Ein solches kupferfreies Lot bietet den Vorteil einer höheren Solidustemperatur (diese beträgt ohne Kupferzusatz ungefähr 960 °C, mit Kupferzusatz ungefähr 780 °C). Da reines Silber Keramikoberflächen nicht benetzt, wird den Silberbasisloten ohne Kupferzusatz Kupfer(II)oxid zur Verkleinerung des Randwinkels zugesetzt. Die Lötung mit Silberbasisloten ohne Kupferzusatz erfolgt in einer Luftatmosphäre oder in einer Schutzgasatmosphäre, beispielsweise unter Argon.

Die Löttemperatur beträgt auch in diesem Fall vorzugsweise ungefähr 1050 °C, die Lötdauer beispielsweise ungefähr 5 Minuten.

Alternativ zum Einlöten der KEA-Einheit 108 in das Gehäuseoberteil 106 kann auch vorgesehen sein, dass ein Substrat, auf dem die KEA-Einheit 108 noch nicht erzeugt worden ist, mit dem Gehäuseoberteil 106 verschweißt wird und nach der Verschweißung die elektrochemisch aktiven Schichten der KEA-Einheit 108, d. h. deren Anode, Elektrolyt und Kathode, nacheinander im Vakuumplasmaspritzverfahren auf dem mit dem Gehäuseoberteil 106 bereits verschweißten Substrat erzeugt werden.

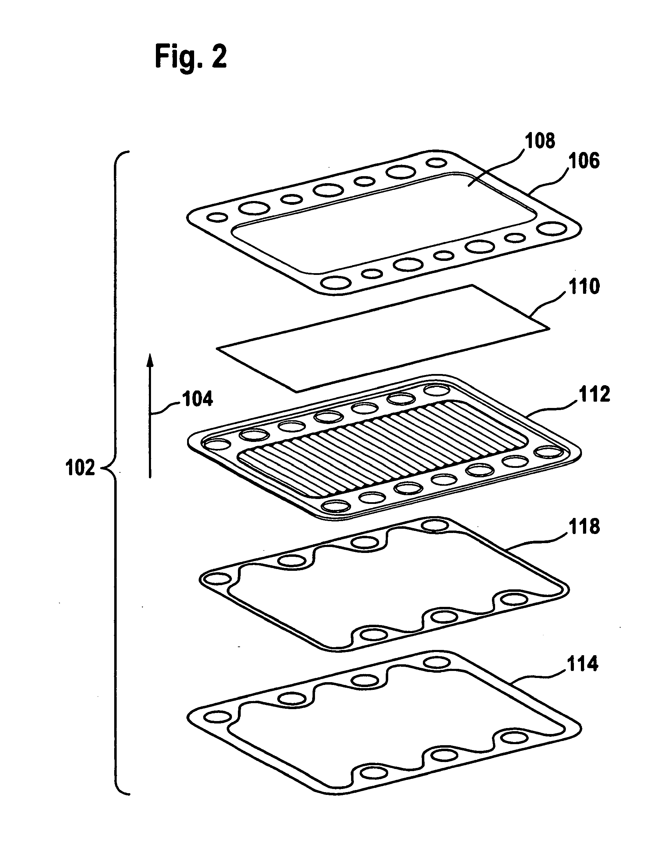

Nach der Verbindung der KEA-Einheit 108 mit dem Gehäuseoberteil 106 ist der in Fig. 2 dargestellte Zustand erreicht.

Nun wird das Zwischenelement 114 an seiner dem Gehäuseunterteil 112 zugewandten, mit der Dichtungsanordnung 118 versehenen Seite mittels des Lötmaterials der Lotschicht 190 mit dem Gehäuseunterteil 112 an dessen dem Zwischenelement 114 zugewandten Seite verlötet.

Der Lötvorgang erfolgt in einer sauerstoffhaltigen Atmosphäre und kann im übrigen unter denselben Bedingungen erfolgen, die vorstehend im Zusammenhang mit der Verlötung des Elektrolyten 109 und des Gehäuseoberteils 106 beschrieben worden sind.

Das benötigte Lötmaterial kann als entsprechend zugeschnittene Lötfolie zwischen das Zwischenelement 114 und das Gehäuseunterteil 112 eingelegt werden oder aber mittels eines Dispensers in Form einer Lötmaterialraupe auf die Oberseite der Dichtungsanordnung 118 und/oder auf die Unterseite des Gehäuseunterteils 112 aufgetragen werden. Ferner ist es auch möglich, das

Lötmaterial ganz oder teilweise mittels eines Musterdruckverfahrens, beispielsweise eines Siebdruckverfahrens, auf die Oberseite der Dichtungsanordnung 118 und/oder auf die Unterseite des Gehäuseunterteils 112 aufzubringen.

Außerdem ist es möglich, die Lotschicht 190 durch thermisches Spritzen, insbesondere durch atmosphärisches Plasmaspritzen, Vakuumplasmaspritzen oder Flammspritzen, an der Oberseite der Keramik-Metall-Schicht der Dichtungsanordnung 118 zu erzeugen und anschließend mit dem Gehäuseunterteil 112 zu verlöten. Besonders geeignet ist das Hochgeschwindigkeitsvakuumplasmaspritzen (High Velocity Vacuum Plasma Spraying, HV-VPS).

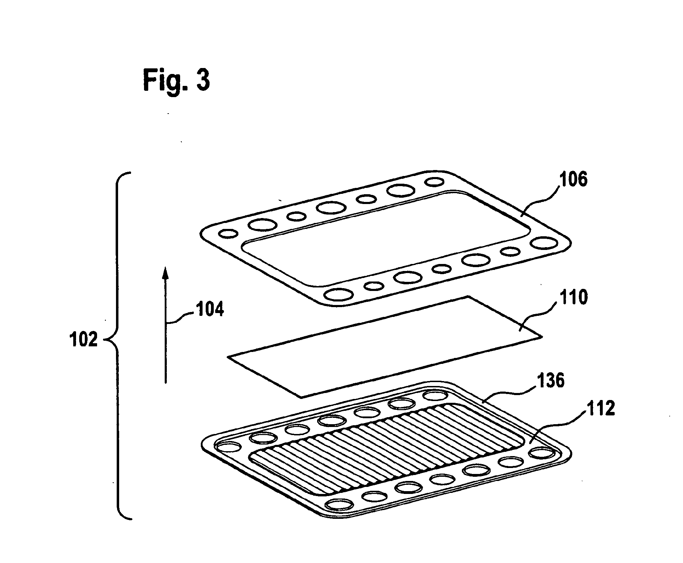

Nachdem das Zwischenelement 114 mit dem Gehäuseunterteil 112 verlötet worden ist, ist der in Fig. 3 dargestellte Zustand erreicht.

Allerdings ist es auch möglich, das Zwischenelement 114 mit dem Gehäuseunterteil 112 zu verlöten, bevor die KEA-Einheit 108 mit dem Gehäuseoberteil 106 verbunden wird, oder die Verbindung des Zwischenelements 114 und des Gehäuseunterteils 112 einerseits und der KEA-Einheit 108 und des Gehäuseoberteils 106 andererseits kann gleichzeitig erfolgen.

Anschließend wird das Kontaktmaterial 110, beispielsweise ein Nickelnetz, zwischen das Gehäuseunterteil 112 und das Gehäuseoberteil 106 eingelegt, und dann werden das Gehäuseunterteil 112 und das Gehäuseoberteil 106 längs einer Schweißnaht 164, die am äußeren Rand des Randflansches 136 des Gehäuseunterteils 112 und am äußeren Rand des Gehäuseoberteils 106 umläuft, und längs Schweißnähten 166, die an den inneren Rändern der Ringflansche 148 des Gehäuseunterteils 112 und der Ränder der Oxidationsmittelzuführöffnungen 124 bzw. der Oxidationsmittelabführöffnungen 128 des Gehäuseoberteils 106 umlaufen, gasdicht miteinander verschweißt.

Nach diesem Verfahrensschritt ist der in Fig. 4 dargestellte Zustand erreicht, in welchem fertig montierte Brennstoffzelleneinheiten 102 vorliegen, welche nun noch miteinander verbunden werden müssen, um aus einer Mehrzahl von in der Stapelrichtung 104 aufeinanderfolgenden Brennstoffzelleneinheiten 102 einen Brennstoffzellenstapel 100 zu bilden.

Die Verbindung zweier in der Stapelrichtung 104 aufeinanderfolgender Brennstoffzelleneinheiten 102 erfolgt in der folgenden Weise:

Eine erste Brennstoffzelleneinheit 102a und eine zweite Brennstoffzelleneinheit 102b werden derart in eine Schweißvorrichtung eingelegt, dass die Oberseite des Gehäuseoberteils 106 der zweiten Brennstoffzelleneinheit 102b flächig an der Unterseite des Zwischenelements 114 der ersten Brennstoffzelleneinheit 102a anliegt.

Anschließend wird das Zwischenelement 114 der ersten Brennstoffzelleneinheit 102a mittels einer Schweißnaht 168, die längs der Außenränder des Zwischenelements 114 und des Gehäuseoberteils 106 verläuft, und mittels Schweißnähten 170, welche rings um die Ränder der Brenngaszuführöffnungen 156 des Zwischenelements 114 und die Ränder der damit fluchtenden Brenngaszuführöffnungen 122 des Gehäuseoberteils 106 bzw. rings um die Ränder der Brenngasabführöffnungen 158 des Zwischenelements 114 und die Ränder der damit fluchtenden Brenngasabführöffnungen 126 des Gehäuseoberteils 106 umlaufen, gasdicht miteinander verschweißt.

Nachdem auf diese Weise zwei Brennstoffzelleneinheiten 102 miteinander verbunden worden sind, kann der Brennstoffzellenstapel 100 durch sukzessives

Anschweißen weiterer Brennstoffzelleneinheiten 102 an das Zwischenelement 114 der zweiten Brennstoffzelleneinheit 102b oder an das Gehäuseoberteil 106 der ersten Brennstoffzelleneinheit 102a in der Stapelrichtung 104 bis zu der gewünschten Anzahl von Brennstoffzelleneinheiten 102 nach und nach aufgebaut werden.

In dem fertiggestellten Brennstoffzellenstapel 100 bilden die jeweils miteinander fluchtenden Brenngaszuführöffnungen 122, 140 und 156 der Gehäuseoberteile 106, der Gehäuseunterteile 112 und der Zwischenelemente 114 jeweils einen Brenngaszuführkanal 172, welcher sich in jeder Brennstoffzelleneinheit 102 zwischen der Oberseite des Gehäuseunterteils 112 und der Unterseite des Gehäuseoberteils 106 zu einem Brenngasraum 174 hin öffnet, der zwischen der Oberseite des Kontaktfeldes 138 des Gehäuseunterteils 112 einerseits und der Unterseite der KEA-Einheit 108 andererseits ausgebildet ist.

Die jeweils miteinander fluchtenden Brenngasabführöffnungen 126, 144 und 158 der Gehäuseoberteile 106, der Gehäuseunterteile 112 und der Zwischenelemente 114 bilden jeweils einen Brenngasabführkanal 176, welcher auf der den Brenngaszuführkanälen 172 gegenüberliegenden Seite jeder Brennstoffzelleneinheit 102 im Bereich zwischen der Oberseite des Gehäuseunterteils 112 und der Unterseite des Gehäuseoberteils 106 zu dem Brenngasraum 174 hin geöffnet ist.

Die jeweils miteinander fluchtenden Oxidationsmittelzuführöffnungen 124 und 142 der Gehäuseoberteile 106 und der Gehäuseunterteile 112 sowie die zwischen den Kanalbegrenzungsteilen 154 der Brenngaszuführöffnungen 140 der Zwischenelemente 114 liegenden Bereiche der Durchtrittsöffnungen 160 in den

Zwischenelementen 114 bilden zusammen jeweils einen Oxidationsmittelzuführkanal 178, der im Bereich jeder Brennstoffzelleneinheit 102 zwischen der Oberseite des Gehäuseoberteils 106 und der Unterseite des Gehäuseunterteils 112 der in der Stapelrichtung 104 darüberliegenden Brennstoffzelleneinheit 102 zu dem Oxidationsmittelraum 130 der Brennstoffzelleneinheit 102 hin geöffnet ist.

Ebenso bilden die jeweils miteinander fluchtenden Oxidationsmittelabführöffnungen 128 und 146 der Gehäuseoberteile 106 bzw. der Gehäuseunterteile 112 zusammen mit den zwischen den Kanalbegrenzungsteilen 154 der Brenngasabführöffnungen 144 der Zwischenelemente 114 liegenden Bereichen der Durchtrittsöffnungen 160 in den Zwischenelementen 114 jeweils einen Oxidationsmittelabführkanal 180, welcher auf der den Oxidationsmittelzuführkanälen 178 entgegengesetzten Seite der Brennstoffzelleneinheiten 102 angeordnet ist und sich ebenfalls im Bereich jeder Brennstoffzelleneinheit 102 zwischen der Oberseite des Gehäuseoberteils 106 und der Unterseite des Gehäuseunterteils 112 der in der Stapelrichtung 104 darüberliegenden Brennstoffzelleneinheit 102 zu dem Oxidationsmittelraum 130 der Brennstoffzelleneinheit 102 hin öffnet.

Im Betrieb des Brennstoffzellenstapels 100 wird ein Brenngas dem Brenngasraum 174 jeder Brennstoffzelleneinheit 102 über die Brenngaszuführkanäle 172 zugeführt und durch Oxidation an der Anode 113 der KEA-Einheit 108 entstandenes Abgas sowie nicht verbrauchtes Brenngas durch die Brenngasabführkanäle 176 aus dem Brenngasraum 174 abgeführt.

Ebenso wird ein Oxidationsmittel, beispielsweise Luft, durch die Oxidationsmittelzuführkanäle 178 dem Oxidationsmittelraum 130 jeder Brennstoffzelleneinheit 102 zugeführt und nicht verbrauchtes Oxidationsmittel durch die Oxidationsmittelabführkanäle 180 aus dem Oxidationsmittelraum 130 abgeführt.

Im Betrieb des Brennstoffzellenstapels 100 weisen die KEA-Einheiten 108 eine Temperatur von beispielsweise 850 °C auf, bei welcher der Elektrolyt 109 jeder KEA-Einheit 108 für Sauerstoffionen leitfähig ist. Das Oxidationsmittel aus dem Oxidationsmittelraum 130 nimmt an der Kathode 111 Elektronen auf und gibt zweifach negativ geladene Sauerstoffionen an den Elektrolyten 109 ab, welche durch den Elektrolyten 109 zur Anode 113 wandern. An der Anode 113 wird das Brenngas aus dem Brenngasraum 174 durch die Sauerstoffionen aus dem Elektrolyten 109 oxidiert und gibt dabei Elektronen an die Anode 113 ab.

Die bei der Reaktion an der Anode 113 frei werdenden Elektronen werden von der Anode 113 über das Kontaktmaterial 110 und das Gehäuseunterteil 112 der an der Unterseite des Kontaktfeldes 138 des Gehäuseunterteils 112 anliegenden Kathode 111 einer benachbarten Brennstoffzelleneinheit 102 zugeführt und ermöglichen so die Kathodenreaktion.

Das Gehäuseunterteil 112 und Gehäuseoberteil 106 jeder Brennstoffzelleneinheit 102 sind durch die Schweißnähte 164, 166 elektrisch leitend miteinander verbunden.

Die durch jeweils ein Gehäuseoberteil 106, ein Gehäuseunterteil 112 und ein Zwischenelement 114 gebildeten Gehäuse 182 von in der Stapelrichtung 104 aufeinanderfolgenden Brennstoffzelleneinheiten 102 sind jedoch durch die Dichtungsanordnungen 118 zwischen der Oberseite der Zwischenelemente 114 und der Unterseite der Gehäuseunterteile 112 elektrisch voneinander isoliert. Dabei ist durch die Verlötung der Zwischenelemente 114 mit den Gehäuseunterteilen 112 zugleich eine gasdichte Verbindung zwischen diesen Bauelementen gewährleistet, so dass die Oxidationsmittelräume 130 und die Brenngasräume 174 der Brennstoffzelleneinheiten 102 voneinander und von der Umgebung des Brennstoffzellenstapels 100 gasdicht getrennt sind.

## Patentansprüche

1. Verfahren zum Herstellen einer elektrisch isolierenden Dichtungsanordnung (118) für einen Brennstoffzellenstapel (100), der mehrere Brennstoffzelleneinheiten (102) umfasst, welche längs einer Stapelrichtung (104) aufeinanderfolgen, umfassend folgende Verfahrensschritte:
- Erzeugen einer Keramik-Metall-Schicht aus einer Mischung eines Keramikmaterials und eines Metallmaterials und/oder eines Metallpräkursors;
- Erzeugen einer metallischen Lotschicht (190) zusätzlich zu der Keramik-Metall-Schicht;
- zumindest teilweise Umwandlung des Metalls der Keramik-Metall-Schicht bei einem Lötvorgang in einer sauerstoffhaltigen Atmosphäre in eine elektrisch nichtleitende Metallverbindung zur Erzeugung einer nichtleitenden Grenzschicht (192).

2. Verfahren nach Anspruch 1, **dadurch gekennzeichnet, dass** die Keramik-Metall-Schicht als eine Cermet-Schicht ausgebildet wird.

3. Verfahren nach einem der Ansprüche 1 oder 2, **dadurch gekennzeichnet, dass** die Keramik-Metall-Schicht durch thermisches Spritzen, insbesondere durch atmosphärisches Plasmaspritzen, durch Vakuumplasmaspritzen oder durch Flammspritzen, erzeugt wird.

4. Verfahren nach Anspruch 3, **dadurch gekennzeichnet, dass** die Keramik-Metall-Schicht durch Hochgeschwindigkeitsvakuumplasmaspritzen erzeugt wird.

5. Verfahren nach einem der Ansprüche 1 bis 4, **dadurch gekennzeichnet, dass** die Keramik-Metall-Schicht aus einer Mischung eines pulverförmigen Keramikmaterials und eines pulverförmigen Metalls und/oder eines pulverförmigen Metallpräkursors gebildet wird.

6. Verfahren nach einem der Ansprüche 1 bis 5, **dadurch gekennzeichnet, dass** ein Metallmaterial und/oder ein Metallpräkursor verwendet wird, das bzw. der ein aktives Metall umfasst.

7. Verfahren nach einem der Ansprüche 1 bis 6, **dadurch gekennzeichnet, dass** ein Metallmaterial und/oder ein Metallpräkursor verwendet wird, das bzw. der ein Metall aus der Gruppe Titan, Zirkonium, Hafnium, Niob, Tantal, Silizium, Cer, Vanadium umfasst.

8. Verfahren nach einem der Ansprüche 1 bis 7, **dadurch gekennzeichnet, dass** als Metallpräkursor ein Hydrid eines aktiven Metalls verwendet wird.

9. Verfahren nach einem der Ansprüche 1 bis 8, **dadurch gekennzeichnet, dass** zur Erzeugung der Keramik-Metall-Schicht ein Keramikmaterial verwendet wird, das Aluminiumoxid und/oder Titandioxid und/oder Zirkoniumdioxid und/oder Magnesiumoxid umfasst.

10. Verfahren nach einem der Ansprüche 1 bis 9, **dadurch gekennzeichnet, dass** zur Erzeugung der Keramik-Metall-Schicht ein Keramikmaterial verwendet wird, das Yttrium-stabilisiertes Zirkoniumdioxid umfasst.

11. Verfahren nach einem der Ansprüche 1 bis 10, **dadurch gekennzeichnet, dass** zur Erzeugung der Keramik-Metall-Schicht ein Keramikmaterial verwendet wird, das einen Aluminium-Magnesium-Spinell umfasst.

12. Verfahren nach einem der Ansprüche 1 bis 11, **dadurch gekennzeichnet, dass** zur Erzeugung der Keramik-Metall-Schicht eine Mischung aus einem Keramikmaterial und einem Metallmaterial und/oder einem Metallpräkursor verwendet wird, in welcher das mittlere Mischungsverhältnis des Keramikmaterials zu dem Metallmaterial, zu dem Metallpräkursor bzw. zu der Summe aus dem Metallmaterial und dem Metallpräkursor nach Gewichtsteilen von 5:1 bis 30:1, vorzugsweise von 15:1 bis 25:1, beträgt.

13. Verfahren nach einem der Ansprüche 1 bis 12, **dadurch gekennzeichnet, dass** das Mischungsverhältnis des Keramikmaterials zu dem Metallmaterial, zu dem Metallpräkursor bzw. zu der Summe aus dem Metallmaterial und dem Metallpräkursor während der Erzeugung der Keramik-Metall-Schicht variiert wird.

14. Verfahren nach Anspruch 13, **dadurch gekennzeichnet, dass** die erzeugte nichtleitende Grenzschicht (192) mittels der metallischen Lotschicht (190) mit einem Bauteil (112) des Brennstoffzellenstapels (100) verlötet wird und dass das Mischungsverhältnis des Keramikmaterials zu dem Metallmaterial, zu dem Metallpräkursor bzw. zu der Summe aus dem Metallmaterial und dem Metallpräkursor während der Erzeugung der Keramik-Metall-Schicht so variiert wird, dass der Gewichtsanteil des Metallmaterials an der nichtleitenden Grenzschicht (192) mit abnehmendem Abstand von der später aufzubringenden Lotschicht (190) zunimmt.

15. Verfahren nach einem der Ansprüche 1 bis 14, **dadurch gekennzeichnet, dass** die Keramik-Metall-Schicht mit einer mittleren Schichtdicke von 10 µm bis 80 µm, vorzugsweise von 20 µm bis 60 µm, erzeugt wird.

16. Verfahren nach einem der Ansprüche 1 bis 15, **dadurch gekennzeichnet, dass** zusätzlich zu der nichtleitenden Grenzschicht (192) eine Isolationsschicht (162) aus einem elektrisch isolierenden Keramikmaterial gebildet wird.

17. Verfahren nach Anspruch 16, **dadurch gekennzeichnet, dass** die nichtleitende Grenzschicht (192) mittels der metallischen Lotschicht (190) mit einem Bauteil (112) des Brennstoffzellenstapels (100) verlötet wird und dass die Isolationsschicht (162) so erzeugt wird, dass sie auf der der Lotschicht (190) abgewandten Seite der nichtleitenden Grenzschicht (192) angeordnet ist.

18. Verfahren nach einem der Ansprüche 16 oder 17, **dadurch gekennzeichnet, dass** die Isolationsschicht (162) durch thermisches Spritzen, insbesondere durch atmosphärisches Plasmaspritzen, durch Vakuumplasmaspritzen oder durch Flammspritzen, erzeugt wird.

19. Verfahren nach Anspruch 18, **dadurch gekennzeichnet, dass** die Isolationsschicht (162) durch Hochgeschwindigkeitsvakuumplasmaspritzen erzeugt wird.

20. Verfahren nach einem der Ansprüche 16 bis 19, **dadurch gekennzeichnet, dass** zur Erzeugung der Isolationsschicht (162) ein Keramikmaterial verwendet wird, das Aluminiumoxid und/oder Titandioxid und/oder Zirkoniumdioxid und/oder Magnesiumoxid umfasst.

21. Verfahren nach einem der Ansprüche 16 bis 20, **dadurch gekennzeichnet, dass** zur Erzeugung der Isolationsschicht (162) ein Keramikmaterial verwendet wird, das einen Aluminium-Magnesium-Spinell umfasst.

22. Verfahren nach einem der Ansprüche 16 bis 21, **dadurch gekennzeichnet, dass** die Isolationsschicht (162) mit einer mittleren Schichtdicke von 50 µm bis 200 µm, vorzugsweise von 100 µm 140 µm, erzeugt wird.

23. Verfahren nach einem der Ansprüche 1 bis 22, **dadurch gekennzeichnet, dass** die Lotschicht (190) zumindest teilweise durch thermisches Aufspritzen von Lotmaterial erzeugt wird.

24. Verfahren nach einem der Ansprüche 1 bis 23, **dadurch gekennzeichnet, dass** zur Erzeugung der Lotschicht (190) ein Silberbasislot mit Zusatz von elementarem Kupfer verwendet wird.

25. Verfahren nach einem der Ansprüche 1 bis 24, **dadurch gekennzeichnet, dass** zur Erzeugung der Lotschicht (190) ein Silberbasislot ohne Zusatz von elementarem Kupfer verwendet wird.

26. Verfahren nach Anspruch 25, **dadurch gekennzeichnet, dass** zur Erzeugung der Lotschicht (190) ein Silberbasislot verwendet wird, das einen Zusatz von Kupferoxid enthält.

27. Verfahren nach einem der Ansprüche 1 bis 26, **dadurch gekennzeichnet, dass** zur Erzeugung der Lotschicht (190) ein Silberbasislot mit Titanzusatz verwendet wird.

28. Verfahren nach einem der Ansprüche 1 bis 27, **dadurch gekennzeichnet, dass** die die nichtleitende Grenzschicht (192) umfassende Dichtungsanordnung (118) als eine Beschichtung auf einem, vorzugsweise metallischen, Bauteil (114) einer Brennstoffzelleneinheit (102) des Brennstoffzellenstapels (100) ausgebildet wird.

29. Verfahren nach einem der Ansprüche 1 bis 28, **dadurch gekennzeichnet, dass** die die nichtleitende Grenzschicht (192) umfassende Dichtungsanordnung (118) mit einem, vorzugsweise metallischen, Bauteil (112) einer Brennstoffzelleneinheit (102) des Brennstoffzellenstapels (100) verlötet wird.

30. Verfahren nach einem der Ansprüche 1 bis 29, **dadurch gekennzeichnet, dass** das Metall der Keramik-Metall-Schicht zumindest teilweise in nichtleitendes Metalloxid umgewandelt wird.

31. Verfahren nach einem der Ansprüche 1 bis 30, **dadurch gekennzeichnet, dass** das Metall der Keramik-Metall-Schicht bei einem Lötvorgang in einer sauerstoffhaltigen Atmosphäre zumindest teilweise in nichtleitendes Metalloxid umgewandelt wird.

32. Dichtungsanordnung eines Brennstoffzellenstapels (100), der mehrere Brennstoffzelleneinheiten (102) umfasst, welche längs einer Stapelrichtung (104) aufeinanderfolgen, wobei die Dichtungsanordnung (118) eine elektrische Isolationswirkung aufweist,
wobei die Dichtungsanordnung (118) mindestens eine nichtleitende Grenzschicht (192), die aus einer Mischung eines Keramikmaterials und einer bei einem Lötvorgang in einer sauerstoffhaltigen Atmosphäre in situ aus einem Metall gebildeten nichtleitenden Metallverbindung gebildet ist, und zusätzlich zu der nichtleitenden Grenzschicht (192) eine metallische Lotschicht (190) umfasst.

33. Dichtungsanordnung nach Anspruch 32, **dadurch gekennzeichnet, dass** die nichtleitende Metallverbindung eine Verbindung eines Metalls umfasst.

34. Dichtungsanordnung nach Anspruch 33, **dadurch gekennzeichnet, dass** die nichtleitende Metallverbindung eine Verbindung eines Metalls aus der Gruppe Titan, Zirkonium, Hafnium, Niob, Tantal, Silizium, Cer, Vanadium umfasst.

35. Dichtungsanordnung nach einem der Ansprüche 32 bis 34, **dadurch gekennzeichnet, dass** das Keramikmaterial der nichtleitenden Grenzschicht (192) Yttrium-stabilisiertes Zirkoniumdioxid umfasst.

36. Dichtungsanordnung nach einem der Ansprüche 32 bis 35, **dadurch gekennzeichnet, dass** das Keramikmaterial der nichtleitenden Grenzschicht (192) einen Aluminium-Magnesium-Spinell umfasst.

37. Dichtungsanordnung nach einem der Ansprüche 32 bis 36, **dadurch gekennzeichnet, dass** das mittlere Mischungsverhältnis des Keramikmaterials zu der nichtleitenden Metallverbindung der nichtleitenden Grenzschicht (192) nach Gewichtsteilen von 5:1 bis 30:1, vorzugsweise von 15:1 bis 25:1, beträgt.

38. Dichtungsanordnung nach einem der Ansprüche 32 bis 37, **dadurch gekennzeichnet, dass** das Mischungsverhältnis des Keramikmaterials zu der nichtleitenden Metallverbindung in der nichtleitenden Grenzschicht (192) längs der Schichtdickenrichtung (104) variiert.

39. Dichtungsanordnung nach Anspruch 38, **dadurch gekennzeichnet, dass** die nichtleitende Grenzschicht (192) mittels der metallischen Lotschicht (190) mit einem Bauteil (112) des Brennstoffzellenstapels (100) verlötet ist und dass der Gewichtsanteil der nichtleitenden Metallverbindung an der nichtleitenden Grenzschicht (192) mit wachsendem Abstand von der Lotschicht (190) abnimmt.

40. Dichtungsanordnung nach einem der Ansprüche 32 bis 39, **dadurch gekennzeichnet, dass** die mittlere Schichtdicke der nichtleitenden Grenzschicht (192) von 10 µm bis 80 µm, vorzugsweise von 20 µm bis 60 µm, beträgt.

41. Dichtungsanordnung nach einem der Ansprüche 32 bis 40, **dadurch gekennzeichnet, dass** die Dichtungsanordnung (118) zusätzlich zu der nichtleitenden Grenzschicht (192) eine Isolationsschicht (162) aus einem elektrisch isolierenden Keramikmaterial umfasst.

42. Dichtungsanordnung nach Anspruch 41, **dadurch gekennzeichnet, dass** die nichtleitende Grenzschicht (192) mittels der metallischen Lotschicht (190) mit einem Bauteil (112) des Brennstoffzellenstapels (100) verlötet ist und dass die Isolationsschicht (162) auf der der Lotschicht (190) abgewandten Seite der nichtleitenden Grenzschicht (192) angeordnet ist.

43. Dichtungsanordnung nach einem der Ansprüche 41 oder 42, **dadurch gekennzeichnet, dass** die Isolationsschicht (162) eine thermisch gespritzte, insbesondere atmosphärisch plasmagespritzte, vakuumplasmagespritzte oder flammgespritzte, Schicht ist.

44. Dichtungsanordnung nach Anspruch 43, **dadurch gekennzeichnet, dass** die Isolationsschicht (162) eine hochgeschwindigkeitsvakuumplasmagespritzte Schicht ist.

45. Dichtungsanordnung nach einem der Ansprüche 41 bis 44, **dadurch gekennzeichnet, dass** das Keramikmaterial der Isolationsschicht (162) Aluminiumoxid und/oder Titandioxid und/oder Zirkoniumdioxid und/oder Magnesiumoxid umfasst.

46. Dichtungsanordnung nach einem der Ansprüche 41 bis 45, **dadurch gekennzeichnet, dass** das Keramikmaterial der Isolationsschicht (162) einen Aluminium-Magnesium-Spinell umfasst.

47. Dichtungsanordnung nach einem der Ansprüche 41 bis 46, **dadurch gekennzeichnet, dass** die mittlere Schichtdicke der Isolationsschicht (162) von 50 µm bis 200 µm, vorzugsweise von 100 µm bis 140 µm, beträgt.

48. Dichtungsanordnung nach einem der Ansprüche 32 bis 47, **dadurch gekennzeichnet, dass** die Lotschicht (190) ein thermisch aufgespritztes Lotmaterial enthält.

49. Dichtungsanordnung nach einem der Ansprüche 32 bis 48, **dadurch gekennzeichnet, dass** die Lotschicht (190) ein Silberbasislot mit Zusatz von elementarem Kupfer enthält.

50. Dichtungsanordnung nach einem der Ansprüche 32 bis 49, **dadurch gekennzeichnet, dass** die Lotschicht (190) ein Silberbasislot ohne Zusatz von elementarem Kupfer enthält.

51. Dichtungsanordnung nach Anspruch 50, **dadurch gekennzeichnet, dass** das Silberbasislot einen Zusatz von Kupferoxid enthält.

52. Dichtungsanordnung nach einem der Ansprüche 32 bis 51, **dadurch gekennzeichnet, dass** die Lotschicht (190) ein Silberbasislot mit Titanzusatz enthält.

53. Dichtungsanordnung nach einem der Ansprüche 32 bis 52, **dadurch gekennzeichnet, dass** die Dichtungsanordnung (118) als eine Beschichtung auf einem, vorzugsweise metallischen, Bauteil (114) einer Brennstoffzelleneinheit (102) des Brennstoffzellenstapels (100) ausgebildet ist.

54. Dichtungsanordnung nach einem der Ansprüche 32 bis 53, **dadurch gekennzeichnet, dass** die Dichtungsanordnung (118) mit einem, vorzugsweise metallischen, Bauteil (112) einer Brennstoffzelleneinheit (102) des Brennstoffzellenstapels (100) verlötet ist.

55. Dichtungsanordnung nach einem der Ansprüche 32 bis 54, **dadurch gekennzeichnet, dass** die nichtleitende Metallverbindung ein nichtleitendes Metalloxid umfasst.

56. Dichtungsanordnung nach einem der Ansprüche 32 bis 55, **dadurch gekennzeichnet, dass** die nichtleitende Grenzschicht (192) bei einem Lötvorgang in einer sauerstoffhaltigen Atmosphäre gebildetes Metalloxid umfasst.

57. Brennstoffzellenstapel, umfassend mehrere Brennstoffzelleneinheiten (102), welche längs einer Stapelrichtung (104) aufeinanderfolgen, und mindestens eine Dichtungsanordnung nach einem der Ansprüche 32 bis 56.

## Claims

1. A method of producing an electrically insulating sealing arrangement (118) for a fuel cell stack (100) which comprises a plurality of fuel cell units (102) that succeed one another along a stack direction (104) comprising the following method steps:
- producing a ceramic metal layer from a mixture of a ceramic material and a metal material and/or a metal precursor;
- producing a metallic braze layer (190) in addition to the ceramic metal layer;
- at least partially converting the metal of the ceramic metal layer in a brazing process in an oxygen-containing atmosphere into an electrically non conductive metal compound so as to produce a non conductive boundary layer (192).

2. A method in accordance with Claim 1, **characterised in that** the ceramic metal layer is in the form of a Cermet layer.

3. A method in accordance with either of the Claims 1 or 2, **characterised in that** the ceramic metal layer is produced by a thermal spraying process, in particular by an atmospheric plasma spraying process, by a vacuum plasma spraying process or by a flame spraying process.

4. A method in accordance with Claim 3, **characterised in that** the ceramic metal layer is produced by a high-velocity vacuum plasma spraying process.

5. A method in accordance with any of the Claims 1 to 4, **characterised in that** the ceramic metal layer is formed from a mixture of a powdered ceramic material and a powdered metal and/or a powdered metal precursor.

6. A method in accordance with any of the Claims 1 to 5, **characterised in that** there is used a metal material and/or a metal precursor which comprises an active metal.

7. A method in accordance with any of the Claims 1 to 6, **characterised in that** a metal material and/or a metal precursor is used which comprises a metal from the group titanium, zirconium, hafnium, niobium, tantalum, silicon, cerium, vanadium.

8. A method in accordance with any of the Claims 1 to 7, **characterised in that** a hydride of an active metal is used as the metal precursor.

9. A method in accordance with any of the Claims 1 to 8, **characterised in that** a ceramic material which comprises aluminium oxide and/or titanium dioxide and/or zirconium dioxide and/or magnesium oxide is used for the production of the ceramic metal layer.

10. A method in accordance with any of the Claims 1 to 9, **characterised in that** a ceramic material which comprises yttrium-stabilized zirconium dioxide is used for the production of the ceramic metal layer.

11. A method in accordance with any of the Claims 1 to 10, **characterised in that** a ceramic material which comprises an aluminium magnesium spinel is used for the production of the ceramic metal layer.

12. A method in accordance with any of the Claims 1 to 11, **characterised in that**, for the purposes of producing the ceramic metal layer, there is used a mixture consisting of a ceramic material and a metal material and/or a metal precursor, in which the average ratio of the ceramic material in the mixture to the metal material, to the metal precursor or to the sum of the metal material and the metal precursor, in parts by weight, amounts to from 5:1 up to 30:1, preferably from 15:1 up to 25:1.

13. A method in accordance with any of the Claims 1 to 12, **characterised in that** the ratio of the ceramic material in the mixture to the metal material, to the metal precursor or to the sum of the metal material and the metal precursor is varied during the process of producing the ceramic metal layer.

14. A method in accordance with Claim 13, **characterised in that** the non conductive boundary layer (192) that has been produced is brazed to a component (112) of the fuel cell stack (100) by means of the metallic braze layer (190), and **in that** the ratio of the ceramic material in the mixture to the metal material, to the metal precursor or to the sum of the metal material and the metal precursor is varied during the production of the ceramic metal layer in such a way that the part-by-weight of the metal material in the non conductive boundary layer (192) increases with decreasing distance from the braze layer (190) that is to be subsequently applied.

15. A method in accordance with any of the Claims 1 to 14, **characterised in that** the ceramic metal layer is produced with an average layer thickness of 10 µm up to 80 µm, preferably of 20 µm up to 60 µm.

16. A method in accordance with any of the Claims 1 to 15, **characterised in that** an insulating layer (162) consisting of an electrically insulating ceramic material is formed in addition to the non conductive boundary layer (192).

17. A method in accordance with Claim 16, **characterised in that** the non conductive boundary layer (192) is brazed to a component (112) of the fuel cell stack (100) by means of the metallic braze layer (190), and **in that** the insulating layer (162) is produced in such a way that it is arranged on the side of the non conductive boundary layer (192) remote from the braze layer (190).

18. A method in accordance with either of the Claims 16 or 17, **characterised in that** the insulating layer (162) is produced by thermal spraying, in particular by atmospheric plasma spraying, by vacuum plasma spraying or by flame spraying.

19. A method in accordance with Claim 18, **characterised in that** the insulating layer (162) is produced by a high-velocity vacuum plasma spraying process.

20. A method in accordance with any of the Claims 16 to 19, **characterised in that** for the purposes of producing the insulating layer (162), there is used a ceramic material which comprises aluminium oxide and/or titanium dioxide and/or zirconium dioxide and/or magnesium oxide.

21. A method in accordance with any of the Claims 16 to 20, **characterised in that** for the purposes of producing the insulating layer (162), there is used a ceramic material which comprises an aluminium magnesium spinel.

22. A method in accordance with any of the Claims 16 to 21, **characterised in that** the insulating layer (162) is produced with an average layer thickness of 50 µm up to 200 µm, preferably, of 100 µm up to 140 µm.

23. A method in accordance with any of the Claims 1 to 22, **characterised in that** the braze layer (190) is at least partly produced by a process of thermally spraying braze material.

24. A method in accordance with any of the Claims 1 to 23, **characterised in that** for the purposes of producing the braze layer (190), a silver based braze including an additive of elementary copper is used.

25. A method in accordance with any of the Claims 1 to 24, **characterised in that** for the purposes of producing the braze layer (190), a silver based braze without the addition of elementary copper is used.

26. A method in accordance with Claim 25, **characterised in that** for the purposes of producing the braze layer (190), there is used a silver based braze which contains an additive of copper oxide.

27. A method in accordance with any of the Claims 1 to 26 **characterised in that** for the purposes of producing the braze layer (190), there is used a silver based braze including a titanium additive.

28. A method in accordance with any of the Claims 1 to 27, **characterised in that** the sealing arrangement (118) comprising the non conductive boundary layer (192) is formed as a coating on a preferably metallic component (114) of a fuel cell unit (102) of the fuel cell stack (100) .

29. A method in accordance with any of the Claims 1 to 28, **characterised in that** the sealing arrangement (118) comprising the non conductive boundary layer (192) is brazed to a preferably metallic component (112) of a fuel cell unit (102) of the fuel cell stack (100).

30. A method in accordance with any of the Claims 1 to 29, **characterised in that** the metal of the ceramic metal layer is at least partially converted into a non conductive metal oxide.

31. A method in accordance with any of the Claims 1 to 30, **characterised in that** the metal of the ceramic metal layer is at least partially converted into a non conductive metal oxide during a brazing process in an oxygen-containing atmosphere.

32. A sealing arrangement of a fuel cell stack (100) which comprises a plurality of fuel cell units (102) that succeed one another along a stack direction (104),
wherein the sealing arrangement (118) exhibits an electrically insulating effect,
wherein the sealing arrangement (118) comprises at least one non conductive boundary layer (192) which is formed from a mixture of a ceramic material and a non conductive metal compound formed in situ in a brazing process in an oxygen-containing atmosphere, and in addition to the non conductive boundary layer (192) a metallic braze layer (190).

33. A sealing arrangement in accordance with Claim 32, **characterised in that** the non conductive metal compound comprises a compound of a metal.

34. A sealing arrangement in accordance with Claim 33, **characterised in that** the non conductive metal compound comprises a compound of a metal from the group titanium, zirconium, hafnium, niobium, tantalum, silicon, cerium, vanadium.

35. A sealing arrangement in accordance with any of the Claims 32 to 34, **characterised in that** the ceramic material of the non conductive boundary layer (192) comprises yttrium-stabilized zirconium dioxide.

36. A sealing arrangement in accordance with any of the Claims 32 to 35, **characterised in that** the ceramic material of the non conductive boundary layer (192) comprises an aluminium magnesium spinel.

37. A sealing arrangement in accordance with any of the Claims 32 to 36, **characterised in that** the average ratio of the ceramic material in the mixture to the non conductive metal compound of the non conductive boundary layer (192) amounts, in parts by weight, to from 5:1 to 30:1, preferably from 15:1 to 25:1.

38. A sealing arrangement in accordance with any of the Claims 32 to 37, **characterised in that** the ratio of the ceramic material in the mixture to the non conductive metal compound in the non conductive boundary layer (192) varies in the direction of the layer thickness (104).

39. A sealing arrangement in accordance with Claim 38, **characterised in that** the non conductive boundary layer (192) is brazed to a component (112) of the fuel cell stack (100) by means of the metallic braze layer (190), and **in that** the part-by-weight of the non conductive metal compound in the non conductive boundary layer (192) decreases with increasing distance from the braze layer (190) .

40. A sealing arrangement in accordance with any of the Claims 32 to 39, **characterised in that** the average layer thickness of the non conductive boundary layer (192) amounts to from 10 µm to 80 µm, preferably from 20 µm to 60 µm.

41. A sealing arrangement in accordance with any of the Claims 32 to 40, **characterised in that** the sealing arrangement (118) comprises an insulating layer (162) consisting of an electrically insulating ceramic material in addition to the non conductive boundary layer (192).

42. A sealing arrangement in accordance with Claim 41, **characterised in that** the non conductive boundary layer (192) is brazed to a component (112) of the fuel cell stack (100) by means of the metallic braze layer (190), and **in that** the insulating layer (162) is arranged on the side of the non conductive boundary layer (192) remote from the braze layer (190).

43. A sealing arrangement in accordance with either of the Claims 41 or 42, **characterised in that** the insulating layer (162) is a thermally sprayed, in particular atmospherically plasma-sprayed, vacuum-plasma-sprayed or a flame-sprayed layer.

44. A sealing arrangement in accordance with Claim 43, **characterised in that** the insulating layer (162) is a high-velocity vacuum-plasma-sprayed layer.

45. A sealing arrangement in accordance with any of the Claims 41 to 44, **characterised in that** the ceramic material of the insulating layer (162) comprises aluminium oxide and/or titanium dioxide and/or zirconium dioxide and/or magnesium oxide.

46. A sealing arrangement in accordance with any of the Claims 41 to 45, **characterised in that** the ceramic material of the insulating layer (162) comprises an aluminium magnesium spinel.

47. A sealing arrangement in accordance with any of the Claims 41 to 46, **characterised in that** the average layer thickness of the insulating layer (162) amounts to from 50 µm to 200 µm, preferably from 100 µm to 140 µm.

48. A sealing arrangement in accordance with any of the Claims 32 to 47, **characterised in that** the braze layer (190) contains a thermally sprayed braze material.

49. A sealing arrangement in accordance with any of the claims 32 to 48, **characterised in that** the braze layer (190) contains a silver based braze with an additive of elementary copper.

50. A sealing arrangement in accordance with any of the Claims 32 to 49, **characterised in that** the braze layer (190) contains a silver based braze without an additive of elementary copper.

51. A sealing arrangement in accordance with Claim 50, **characterised in that** the silver based braze contains an additive of copper oxide.

52. A sealing arrangement in accordance with any of the Claims 32 to 51, **characterised in that** the braze layer (190) contains a silver based braze with a titanium additive.

53. A sealing arrangement in accordance with any of the Claims 32 to 52, **characterised in that** the sealing arrangement (118) is formed as a coating on a preferably metallic component (114) of a fuel cell unit (102) of the fuel cell stack (100).

54. A sealing arrangement in accordance with any of the Claims 32 to 53, **characterised in that** the sealing arrangement (118) is brazed to a preferably metallic component (112) of a fuel cell unit (102) of the fuel cell stack (100).

55. A sealing arrangement in accordance with any of the Claims 32 to 54, **characterised in that** the non conductive metal compound comprises a non conductive metal oxide.

56. A sealing arrangement in accordance with any of the Claims 32 to 55, **characterised in that** the non conductive boundary layer (192) comprises a metal oxide formed during a brazing process in an oxygen-containing atmosphere.

57. A fuel cell stack comprising a plurality of fuel cell units (102) which succeed one another along a stack direction (104), and at least one sealing arrangement in accordance with any of the Claims 32 to 56.

## Revendications

1. Procédé de réalisation d'une garniture d'étanchéité (118) électro-isolante pour un empilement de piles à combustible (100), qui comporte plusieurs piles à combustible (102) qui se succèdent le long d'une direction d'empilement (104), comportant les étapes suivantes :
■ production d'une couche en céramique et métal, formée par un mélange d'un matériau céramique et d'un matériau métallique et/ou d'un précurseur métallique ;
■ production d'une couche de brasage (190) métallique en plus de la couche en céramique et métal ;
■ transformation au moins partielle du métal de la couche en céramique et métal lors d'un processus de brasage sous une atmosphère contenant de l'oxygène en un composé métallique non électroconducteur pour produire une interface (192) non conductrice.

2. Procédé selon la revendication 1, **caractérisé en ce que** la couche en céramique et métal est réalisée sous la forme d'une couche de cermet.

3. Procédé selon la revendication 1 ou 2, **caractérisé en ce que** la couche en céramique et métal est produite par projection thermique, en particulier par projection au plasma atmosphérique, par projection au plasma sous vide ou par projection de flamme.

4. Procédé selon la revendication 3, **caractérisé en ce que** la couche en céramique et métal est produite par projection au plasma sous vide à haute vitesse.

5. Procédé selon l'une quelconque des revendications 1 à 4, **caractérisé en ce que** la couche en céramique et métal est formée par un mélange d'un matériau céramique en poudre et d'un métal en poudre et/ou d'un précurseur métallique en poudre.

6. Procédé selon l'une quelconque des revendications 1 à 5, **caractérisé en ce que** l'on utilise un matériau métallique et/ou un précurseur métallique, qui contient un métal actif.

7. Procédé selon l'une quelconque des revendications 1 à 6, **caractérisé en ce que** l'on utilise un matériau métallique et/ou un précurseur métallique, qui contient un métal issu du groupe titane, zirconium, hafnium, niobium, tantale, silicium, cérium, vanadium.

8. Procédé selon l'une quelconque des revendications 1 à 7, **caractérisé en ce que** le précurseur métallique utilisé est un hydrure d'un métal actif.

9. Procédé selon l'une quelconque des revendications 1 à 8, **caractérisé en ce que** pour produire la couche en céramique et métal, on utilise un matériau céramique qui contient de l'oxyde d'aluminium et/ou du dioxyde de titane et/ou du dioxyde de zirconium et/ou de l'oxyde de magnésium.

10. Procédé selon l'une quelconque des revendications 1 à 9, **caractérisé en ce que** pour produire la couche en céramique et métal, on utilise un matériau céramique qui contient du dioxyde de zirconium stabilisé à l'yttrium.

11. Procédé selon l'une quelconque des revendications 1 à 10, **caractérisé en ce que** pour produire la couche en céramique et métal, on utilise un matériau céramique qui contient un spinelle de magnésium et aluminium.

12. Procédé selon l'une quelconque des revendications 1 à 11, **caractérisé en ce que** pour produire la couche en céramique et métal, on utilise un mélange formé par un matériau céramique et un matériau métallique et/ou un précurseur métallique, dans lequel le rapport de mélange moyen du matériau céramique par rapport au matériau métallique, par rapport au précurseur métallique ou par rapport à la somme formée par le matériau métallique et le précurseur métallique, selon des proportions pondérales, est de l'ordre de 5 : 1 à 30 : 1, de préférence de 15 : 1 à 25 : 1.

13. Procédé selon l'une quelconque des revendications 1 à 12, **caractérisé en ce que** pendant la production de la couche en céramique et métal on fait varier le rapport de mélange moyen du matériau céramique par rapport au matériau métallique, par rapport au précurseur métallique ou par rapport à la somme formée par le matériau métallique et le précurseur métallique.

14. Procédé selon la revendication 13, **caractérisé en ce que** l'interface (192) non conductrice produite est brasée, au moyen de la couche de brasage (190) métallique, à un composant (112) de l'empilement de piles à combustible (100), et **en ce que**, pendant la production de la couche en céramique et métal, on fait varier le rapport de mélange moyen du matériau céramique par rapport au matériau métallique, par rapport au précurseur métallique ou par rapport à la somme formée par le matériau métallique et le précurseur métallique, de telle sorte que le pourcentage en poids du matériau métallique dans l'interface (192) non conductrice augmente avec la diminution de la distance par rapport à la couche de brasage (190) à déposer ultérieurement.

15. Procédé selon l'une quelconque des revendications 1 à 14, **caractérisé en ce que** la couche en céramique et métal est produite avec une épaisseur de couche moyenne de 10 µm à 80 µm, de préférence de 20 µm à 60 µm.

16. Procédé selon l'une quelconque des revendications 1 à 15, **caractérisé en ce qu'**une couche isolante (162), réalisée dans un matériau céramique électro-isolant, est formée en plus de l'interface (192) non conductrice.

17. Procédé selon la revendication 16, **caractérisé en ce que** l'interface (192) non conductrice est brasée, au moyen de la couche de brasage (190) métallique, à un composant (112) de l'empilement de piles à combustible (100), et **en ce que** la couche isolante (162) est produite de telle sorte qu'elle est disposée sur la face de l'interface (192) non conductrice, détournée de la couche de brasage (190).

18. Procédé selon la revendication 16 ou 17, **caractérisé en ce que** la couche isolante (162) est produite par projection thermique, en particulier par projection au plasma atmosphérique, par projection au plasma sous vide ou par projection de flamme.

19. Procédé selon la revendication 18, **caractérisé en ce que** la couche isolante (162) est produite par projection au plasma sous vide à haute vitesse.

20. Procédé selon l'une quelconque des revendications 16 à 19, **caractérisé en ce que** pour produire la couche isolante (162), on utilise un matériau céramique qui contient de l'oxyde d'aluminium et/ou du dioxyde de titane et/ou du dioxyde de zirconium et/ou de l'oxyde de magnésium.

21. Procédé selon l'une quelconque des revendications 16 à 20, **caractérisé en ce que** pour produire la couche isolante (162), on utilise un matériau céramique qui contient un spinelle de magnésium et aluminium.

22. Procédé selon l'une quelconque des revendications 16 à 21, **caractérisé en ce que** la couche isolante (162) est produite avec une épaisseur de couche moyenne de 50 µm à 200 µm, de préférence de 100 µm à 140 µm.

23. Procédé selon l'une quelconque des revendications 1 à 22, **caractérisé en ce que** la couche de brasage (190) est produite au moins partiellement par projection thermique d'un matériau de brasage.

24. Procédé selon l'une quelconque des revendications 1 à 23, **caractérisé en ce que** pour produire la couche de brasage (190) on utilise un métal d'apport de brasage de base en argent avec une addition de cuivre élémentaire.

25. Procédé selon l'une quelconque des revendications 1 à 24, **caractérisé en ce que** pour produire la couche de brasage (190) on utilise un métal d'apport de brasage de base en argent sans addition de cuivre élémentaire.

26. Procédé selon la revendication 25, **caractérisé en ce que** pour produire la couche de brasage (190) on utilise un métal d'apport de brasage de base en argent, qui contient un ajout d'oxyde de cuivre.

27. Procédé selon l'une quelconque des revendications 1 à 26, **caractérisé en ce que** pour produire la couche de brasage (190) on utilise un métal d'apport de brasage de base en argent avec une addition de titane.

28. Procédé selon l'une quelconque des revendications 1 à 27,
**caractérisé en ce que** la garniture d'étanchéité (118),
comportant l'interface (192) non conductrice, est réalisée sous la forme d'un revêtement sur un composant (114), de préférence métallique, d'une pile à combustible (102) de l'empilement de piles à combustible (100).

29. Procédé selon l'une quelconque des revendications 1 à 28,
**caractérisé en ce que** la garniture d'étanchéité (118), comportant l'interface (192) non conductrice, est brasée à un composant (112), de préférence métallique, d'une pile à combustible (102) de l'empilement de piles à combustible (100).

30. Procédé selon l'une quelconque des revendications 1 à 29, **caractérisé en ce que** le métal de la couche en céramique et métal est transformé au moins partiellement en oxyde métallique non conducteur.

31. Procédé selon l'une quelconque des revendications 1 à 30, **caractérisé en ce que** le métal de la couche en céramique et métal est transformé au moins partiellement en oxyde métallique non conducteur pendant un processus de brasage sous une atmosphère contenant de l'oxygène.

32. Garniture d'étanchéité d'un empilement de piles à combustible (100), qui comporte plusieurs piles à combustible (102) qui se succèdent le long d'une direction d'empilement (104), ladite garniture d'étanchéité (118) ayant une action d'isolation électrique, ladite garniture d'étanchéité (118) comportant au moins une interface (192) non conductrice, qui est formée par un mélange d'un matériau céramique et d'un composé métallique non conducteur, formé in situ à partir d'un métal lors d'un processus de brasage sous une atmosphère contenant de l'oxygène, et une couche de brasage (190) métallique en plus de l'interface (192) non conductrice.

33. Garniture d'étanchéité selon la revendication 32,
**caractérisée en ce que** le composé métallique non conducteur contient un composé d'un métal.

34. Garniture d'étanchéité selon la revendication 33,
**caractérisée en ce que** le composé métallique non conducteur contient un composé d'un métal issu du groupe titane, zirconium, hafnium, niobium, tantale, silicium, cérium, vanadium.

35. Garniture d'étanchéité selon l'une quelconque des revendications 32 à 34, **caractérisée en ce que** le matériau céramique de l'interface (192) non conductrice contient du dioxyde de zirconium stabilisé à l'yttrium.

36. Garniture d'étanchéité selon l'une quelconque des revendications 32 à 35, **caractérisée en ce que** le matériau céramique de l'interface (192) non conductrice contient un spinelle de magnésium et aluminium.

37. Garniture d'étanchéité selon l'une quelconque des revendications 32 à 36, **caractérisée en ce que** le rapport de mélange moyen du matériau céramique par rapport au composé métallique non conducteur de l'interface (192) non conductrice, selon des proportions pondérales, est de l'ordre de 5: 1 à 30 : 1, de préférence de 15 : 1 à 25 : 1.

38. Garniture d'étanchéité selon l'une quelconque des revendications 32 à 37, **caractérisée en ce que** le rapport de mélange moyen du matériau céramique par rapport au composé métallique non conducteur dans l'interface (192) non conductrice varie le long de la direction (104) de l'épaisseur des couches.

39. Garniture d'étanchéité selon la revendication 38,
**caractérisée en ce que** l'interface (192) non conductrice est brasée, au moyen de la couche de brasage (190) métallique, à un composant (112) de l'empilement de piles à combustible (100), et **en ce que** le pourcentage en poids du composé métallique non conducteur dans l'interface (192) non conductrice diminue avec l'augmentation de la distance par rapport à la couche de brasage (190).

40. Garniture d'étanchéité selon l'une quelconque des revendications 32 à 39, **caractérisée en ce que** l'interface (192) non conductrice a une épaisseur de couche moyenne de 10 µm à 80 µm, de préférence de 20 µm à 60 µm.

41. Garniture d'étanchéité selon l'une quelconque des revendications 32 à 40, **caractérisée en ce que** ladite garniture d'étanchéité (118) comporte, en plus de l'interface (192) non conductrice, une couche isolante (162) réalisée dans un matériau céramique électro-isolant.

42. Garniture d'étanchéité selon la revendication 41,
**caractérisée en ce que** l'interface (192) non conductrice est brasée, au moyen de la couche de brasage (190) métallique, à un composant (112) de l'empilement de piles à combustible (100), et **en ce que** la couche isolante (162) est disposée sur la face de l'interface (192) non conductrice, détournée de la couche de brasage (190).

43. Garniture d'étanchéité selon la revendication 41 ou 42, **caractérisée en ce que** la couche isolante (162) est une couche déposée par projection thermique, en particulier par projection au plasma atmosphérique, par projection au plasma sous vide ou par projection de flamme.

44. Garniture d'étanchéité selon la revendication 43,
**caractérisée en ce que** la couche isolante (162) est une couche déposée par projection au plasma sous vide à haute vitesse.

45. Garniture d'étanchéité selon l'une quelconque des revendications 41 à 44, **caractérisée en ce que** le matériau céramique de la couche isolante (162) contient de l'oxyde d'aluminium et/ou du dioxyde de titane et/ou du dioxyde de zirconium et/ou de l'oxyde de magnésium.

46. Garniture d'étanchéité selon l'une quelconque des revendications 41 à 45, **caractérisée en ce que** le matériau céramique de la couche isolante (162) contient un spinelle de magnésium et aluminium.

47. Garniture d'étanchéité selon l'une quelconque des revendications 41 à 46, **caractérisée en ce que** la couche isolante (162) a une épaisseur moyenne de 50 µm à 200 µm, de préférence de 100 µm à 140 µm.

48. Garniture d'étanchéité selon l'une quelconque des revendications 32 à 47, **caractérisée en ce que** la couche de brasage (190) contient un matériau de brasage déposé par projection thermique.

49. Garniture d'étanchéité selon l'une quelconque des revendications 32 à 48, **caractérisée en ce que** la couche de brasage (190) contient un métal d'apport de brasage de base en argent avec une addition de cuivre élémentaire.

50. Garniture d'étanchéité selon l'une quelconque des revendications 32 à 49, **caractérisée en ce que** la couche de brasage (190) contient un métal d'apport de brasage de base en argent sans addition de cuivre élémentaire.

51. Garniture d'étanchéité selon la revendication 50,
**caractérisée en ce que** le métal d'apport de brasage de base en argent contient un ajout d'oxyde de cuivre.

52. Garniture d'étanchéité selon l'une quelconque des revendications 32 à 51, **caractérisée en ce que** la couche de brasage (190) contient un métal d'apport de brasage de base en argent avec une addition de titane.

53. Garniture d'étanchéité selon l'une quelconque des revendications 32 à 52, **caractérisée en ce que** ladite garniture d'étanchéité (118) est réalisée sous la forme d'un revêtement sur un composant (114), de préférence métallique, d'une pile à combustible (102) de l'empilement de piles à combustible (100).

54. Garniture d'étanchéité selon l'une quelconque des revendications 32 à 53, **caractérisée en ce que** ladite garniture d'étanchéité (118) est brasée à un composant (112), de préférence métallique, d'une pile à combustible (102) de l'empilement de piles à combustible (100).

55. Garniture d'étanchéité selon l'une quelconque des revendications 32 à 54, **caractérisée en ce que** le composé métallique non conducteur est un oxyde métallique non conducteur.

56. Garniture d'étanchéité selon l'une quelconque des revendications 32 à 55, **caractérisée en ce que** l'interface (192) non conductrice contient un oxyde métallique formée lors d'un processus de brasage sous une atmosphère contenant del'oxygène.

57. Empilement de piles à combustible, comportant plusieurs piles à combustible (102) qui se succèdent le long d'une direction d'empilement (104), et au moins une garniture d'étanchéité selon l'une quelconque des revendications 32 à 56.
